# EUROPEAN PATENT APPLICATION

(11) **EP 4 597 670 A1**
(43) Date of publication of application: **06.08.2025**
(21) Application number: 22969541.6
(22) Date of filing: 27.12.2022
(51) Int. Cl.: H01M 10/0565, H01M 10/054

(54) **GEL ELECTROLYTE COMPOSITION, SECONDARY BATTERY, BATTERY MODULE, BATTERY PACK, AND ELECTRICAL DEVICE**

(71) Applicant: Contemporary Amperex Technology (Hong Kong) Limited, Central (HK)
(72) Inventor: CHEN, Shigang, Ningde, Fujian 352100 (CN); ZHANG, Xinxin, Ningde, Fujian 352100 (CN); GUO, Bingkun, Ningde, Fujian 352100 (CN); LI, Xiaolong, Ningde, Fujian 352100 (CN); YAO, Shikang, Ningde, Fujian 352100 (CN); ZHOU, Qicheng, Ningde, Fujian 352100 (CN)
(74) Representative: Frick, Robert
(86) International application number: PCT/CN2022/142502
(87) International publication number: WO 2024/138385

(57) **Abstract**

A gel electrolyte composition, a secondary battery, a battery module, a battery pack, and an electrical device are disclosed. A viscosity of the gel electrolyte composition at 25 °C is 500 mPa·s to 100000 mPa·s. The gel electrolyte composition falls within an appropriate viscosity range, thereby increasing the interface wettability of the battery and the ionic conductivity of the gel electrolyte composition at a room temperature and a high temperature, and on the other hand, alleviating interface side reactions of the gel electrolyte composition and improving the Coulombic efficiency of the battery.

## Description

### TECHNICAL FIELD

This application relates to the technical field of secondary batteries, and in particular, to a gel electrolyte composition, a secondary battery, a battery module, a battery pack, and an electrical device.

### BACKGROUND

In recent years, secondary batteries have been widely applied in energy storage power systems such as hydro, thermal, wind, and solar power stations, and in many other fields such as electric tools, electric bicycles, electric motorcycles, and electric vehicles, military equipment, and aerospace. With the universal application of the secondary batteries, the requirements on the performance, safety, and the like of the batteries are higher.

Currently, most of batteries adopt a liquid electrolyte. However, on the one hand, the liquid electrolyte is prone to parasitically react with a metallic negative electrode, thereby resulting in a decline in the performance of the battery and increasing safety hazards. On the other hand, the liquid electrolyte is prone to generate dendrites on the negative electrode during cycling and result in a short circuit of the battery, and in severe circumstances, may cause battery explosions, thereby being unable to meet the practical requirements on a new generation of electrochemical system.

### SUMMARY

This application is developed in view of the above challenges. An objective of this application is to provide a gel electrolyte composition. The gel electrolyte composition possesses both the fluidity of a liquid electrolyte and the safety and reliability of an all-solid electrolyte, thereby achieving high kinetic performance of the battery while improving the safety performance of the battery, and in turn, improving the overall performance of the battery.

According to a first aspect, this application provides a gel electrolyte composition. A viscosity of the gel electrolyte composition at 25 °C is 500 mPa·s to 100000 mPa·s.

The gel electrolyte composition falls within an appropriate viscosity range, thereby providing an ion transport channel and improving the ionic conductivity, and furthermore, achieving relatively high safety performance, reducing the gas production phenomena of the battery, especially at a high temperature, improving the safety of the battery, and exerting the advantages of both the liquid electrolyte and the all-solid electrolyte. The gel electrolyte composition falls within an appropriate viscosity range, thereby increasing the interface wettability of the battery and the interface kinetics of the gel electrolyte composition at a room temperature and a high temperature, and on the other hand, alleviating interface side reactions of the gel electrolyte composition, and especially improving the Coulombic efficiency of the battery at a high temperature.

In any embodiment, the gel electrolyte composition includes a solvent. Based on a total amount of substance of the solvent, a percentage of an amount of substance of a free solvent to the total amount of substance of the solvent in the gel electrolyte composition, denoted as *n_{FS}*, satisfies: 0% < *n_{FS}* ≤ 70%.

Controlling the percentage of the amount of substance of the free solvent to the total amount of substance of the solvent in the gel electrolyte composition to fall within an appropriate range ensures that the gel electrolyte composition possesses a relatively high ionic conductivity and is excellent in interface kinetics and a mass transfer process, thereby improving the ionic conductivity of the gel electrolyte composition at a room temperature and a high temperature, and at the same time, avoiding an increase in the gas production amount that is caused by an excessive percentage of the amount of substance of the free solvent and that leads to an increase in the expansion rate of the battery and a decline in the safety of the battery.

In any embodiment, based on a total mass of the gel electrolyte composition, a mass percent of the solvent is 20% to 75%.

The mass percent of the solvent based on the total mass of the gel electrolyte composition is controlled to fall within the range of 20% to 75%, thereby improving the ionic conductivity of the gel electrolyte composition at a room temperature and a high temperature, improving the Coulombic efficiency of the battery at a room temperature and a high temperature as well as the cycle performance of the battery at a room temperature, and broadening the temperature range in which the battery is applicable.

In any embodiment, the gel electrolyte composition further includes an electrolyte salt. Based on a total mass of the gel electrolyte composition, a mass percent of the electrolyte salt is 5% to 70%.

The mass percent of the electrolyte salt based on the total mass of the gel electrolyte composition is controlled to fall within the range of 5% to 70%, thereby improving the ionic conductivity of the gel electrolyte composition at a room temperature and a high temperature, improving the Coulombic efficiency of the battery at a room temperature and a high temperature as well as the cycle performance of the battery at a room temperature, and broadening the temperature range in which the battery is applicable.

In any embodiment, the gel electrolyte composition further includes a polymer. Based on a total mass of the gel electrolyte composition, a mass percent of the polymer is 2% to 20%.

The mass percent of the polymer based on the total mass of the gel electrolyte composition is controlled to fall within the range of 2% to 20%, thereby improving the ionic conductivity of the gel electrolyte composition at a room temperature and a high temperature, improving the Coulombic efficiency of the battery at a room temperature and a high temperature as well as the cycle performance of the battery at a room temperature, and broadening the temperature range in which the battery is applicable.

In any embodiment, the gel electrolyte composition is a supersaturated gel electrolyte composition at 25 °C.

In any embodiment, a viscosity of the supersaturated gel electrolyte composition at 25 °C is 3000 mPa·s to 100000 mPa·s, and the viscosity of the supersaturated gel electrolyte composition at 60 °C is 500 mPa·s to 5000 mPa·s.

In any embodiment, a viscosity of the supersaturated gel electrolyte composition at 25 °C is 3000 mPa·s to 11000 mPa·s, and the viscosity of the supersaturated gel electrolyte composition at 60 °C is 500 mPa·s to 3000 mPa·s.

The supersaturated gel electrolyte composition falls within an appropriate viscosity range, thereby improving the ionic conductivity of the gel electrolyte composition at a room temperature and a high temperature, improving the Coulombic efficiency of the battery at 60 °C, and broadening the temperature range in which the battery is applicable.

In any embodiment, the supersaturated gel electrolyte composition includes a dissolved electrolyte salt and a crystallized electrolyte salt.

The crystallized electrolyte salt is uniformly distributed in the supersaturated gel electrolyte composition system, thereby further improving the mechanical performance of the supersaturated gel electrolyte composition.

In any embodiment, a median particle diameter of the crystallized electrolyte salt is less than or equal to 100 µm.

Controlling the median particle diameter of the crystallized electrolyte salt to be less than or equal to 100 µm can avoid oversized particles that hinder ion transport.

In any embodiment, based on a total mass of the supersaturated gel electrolyte composition, a mass percent of the electrolyte salt is 30% to 70%, a mass percent of the solvent is 20% to 60%, and a mass percent of the polymer is 2% to 20%.

Based on the total mass of the supersaturated gel electrolyte composition, the mass percent of the electrolyte salt is controlled to be 30% to 70%, the mass percent of the solvent is controlled to be 20% to 60%, and the mass percent of the polymer is controlled to be 2% to 20%, thereby improving the ionic conductivity of the supersaturated gel electrolyte composition at a room temperature and a high temperature, and improving the Coulombic efficiency of the battery at 60 °C.

In any embodiment, the electrolyte salt includes a sodium salt; and the sodium salt includes one or more of sodium chloride, sodium bromide, sodium nitrate, sodium perchlorate, sodium hexafluorophosphate, sodium tetrafluoroborate, sodium tetrafluoroyttrate, sodium hexafluoroarsenate, sodium tetraphenylborate, sodium acetate, sodium trifluoroacetate, sodium trifluoromethanesulfonate, sodium bis(fluorosulfonyl)imide, sodium bis(trifluoromethanesulfonyl)imide, or sodium (n-perfluorobutylsulfonyl)imide, and optionally includes one or more of sodium hexafluorophosphate, sodium trifluoromethanesulfonate, sodium bis(fluorosulfonyl)imide, or sodium bis(trifluoromethanesulfonyl)imide.

All of the above sodium salts can improve the Coulombic efficiency of the battery at 60 °C and 80 °C and the performance of the battery. The sodium salt includes one or more of sodium hexafluorophosphate, sodium trifluoromethanesulfonate, sodium bis(fluorosulfonyl)imide, or sodium bis(trifluoromethanesulfonyl)imide, thereby further improving the Coulombic efficiency of the battery at 60 °C and the cycle performance of the battery at 25 °C and 60 °C, and improving the battery performance significantly.

In any embodiment, the solvent includes one or more of an ether organic solvent, an ester organic solvent, or a sulfur-containing organic solvent; and the solvent includes one or more of monoglyme, diglyme, triglyme, tetraglyme, tetrahydrofuran, 1,3-dioxolane, ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propane sultone, methyl propionate, methyl butyrate, ethyl acetate, ethyl propionate, propyl propionate, ethyl butyrate, or dimethyl sulfoxide, and optionally includes one or more of monoglyme, tetrahydrofuran, or 1,3-dioxolane.

All of the above solvents can improve the Coulombic efficiency of the battery at 60 °C. The solvent is one or more selected from monoglyme, tetrahydrofuran, or 1,3-dioxolane, thereby further improving the Coulombic efficiency of the battery at a room temperature and a high temperature, improving the cycle performance of the battery at 25 °C and 60 °C, reducing the thickness expansion rate of the battery cycled at 25 °C and 60 °C, and improving the performance and safety of the battery significantly.

In any embodiment, the polymer includes one or more of polyethylene oxide, polyethylene glycol, polyvinylpyrrolidone, polymethyl methacrylate, polyvinylidene difluoride, polyvinyl alcohol, polyacrylonitrile, polyvinyl chloride, polyacrylamide, polytrimethylene carbonate, perfluoropolyether, or poly(vinylidene difluoride-co-hexafluoropropylene), and optionally includes one or more of polyethylene oxide, polyethylene glycol, perfluoropolyether, or poly(vinylidene difluoride-co-hexafluoropropylene).

All of the above polymers can improve the Coulombic efficiency of the battery at 25 °C and 60 °C and increase the number of cycles of the battery counted when the capacity retention rate of the battery cycled at 60 °C fades to 80%. The polymer is one or more selected from polyethylene oxide, polyethylene glycol, perfluoropolyether, or poly(vinylidene difluoride-co-hexafluoropropylene), thereby further reducing the thickness expansion rate of the battery cycled at 25 °C, reducing the gas production amount, and improving the safety of the battery significantly.

In any embodiment, the electrolyte salt includes one or more of sodium trifluoromethanesulfonate, sodium bis(fluorosulfonyl)imide, or sodium bis(trifluoromethanesulfonyl)imide; the solvent includes one or more of monoglyme, tetrahydrofuran, or 1,3-dioxolane; and the polymer includes one or more of polyethylene oxide, polyethylene glycol, perfluoropolyether, or poly(vinylidene difluoride-co-hexafluoropropylene).

The gel electrolyte composition endows the battery with a high level of both electrical performance and safety performance.

A second aspect of this application provides a secondary battery. The secondary battery includes a positive electrode plate and the gel electrolyte composition disclosed in any one of the above embodiments.

The secondary battery achieves superior cycle performance.

In any embodiment, the secondary battery includes at least one of a lithium battery or a sodium battery.

In any embodiment, the secondary battery is an anode-free sodium battery. The anode-free sodium battery can possess a high energy density.

In any embodiment, a cell balance (CB) value of the anode-free sodium battery is less than or equal to 0.1.

In any embodiment, the positive electrode plate includes a positive active material. The positive active material includes at least one of a layered transition metal oxide, a polyanionic compound, or a Prussian blue compound, including one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, or NaMnFe(CN)₆.

All of the above positive active materials endow the battery with excellent electrical performance.

In any embodiment, a surface of a positive active material is coated with a coating layer. The coating layer includes one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, or aluminum fluoride; and the carbon material includes one or more of amorphous carbon, graphite, or graphene.

The surface of the positive active material is coated with a coating layer, thereby further improving the Coulombic efficiency of the battery at a room temperature and a high temperature, improving the cycle performance of the battery at 25 °C, reducing the thickness expansion rate of the battery cycled at 25 °C and 60 °C, reducing the gas production amount, and improving the performance and safety of the battery significantly.

A third aspect of this application provides a battery module. The battery module includes the secondary battery according to the second aspect of this application.

A fourth aspect of this application provides a battery pack. The battery pack includes the secondary battery according to the second aspect of this application or the battery module according to the third aspect of this application.

A fifth aspect of this application provides an electrical device. The electrical device includes at least one of the secondary battery according to the second aspect of this application, the battery module according to the third aspect of this application, or the battery pack according to the fourth aspect of this application.

### BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application; and
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application.

### List of reference numerals:

1. battery pack; 2. upper box; 3. lower box; 4. battery module; 5. secondary battery; 51. housing; 52. electrode assembly; 53. cover plate.

### DETAILED DESCRIPTION OF EMBODIMENTS

The following describes and discloses in detail embodiments of a gel electrolyte composition, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Currently, liquid electrolytes encounter many challenges, and all-solid electrolytes have attracted attention of researchers by virtue of the ability to effectively suppress side reactions at an interface between a metallic negative electrode and the electrolyte and alleviate the safety hazards caused by dendrites arising from the side reactions. However, most all-solid electrolytes can hardly form an excellent interface in contact with the electrode plate, thereby impairing the ionic conductivity and interface kinetics of the electrolyte, and reducing the C-rate performance of the battery. Therefore, a new electrolyte system needs to be developed to improve the electrochemical performance and safety of the battery concurrently.

### [Gel electrolyte composition]

In view of the situation above, this application discloses a gel electrolyte composition. A viscosity of the gel electrolyte composition at 25 °C is 500 mPa·s to 100000 mPa·s.

As used herein, the term "gel electrolyte composition" means an electrolyte composition that possesses both the fluidity of a liquid electrolyte and the mechanical strength of an all-solid electrolyte.

In some embodiments, the viscosity of the gel electrolyte composition at 25 °C is optionally 500 mPa·s, 1000 mPa·s, 2000 mPa·s, 3000 mPa·s, 4000 mPa·s, 5000 mPa·s, 6000 mPa·s, 7000 mPa·s, 8000 mPa·s, 9000 mPa·s, 10000 mPa·s, 20000 mPa·s, 30000 mPa·s, 40000 mPa·s, 50000 mPa·s, 60000 mPa·s, 70000 mPa·s, 80000 mPa·s, 90000 mPa·s, or 100000 mPa·s.

In this application, the viscosity of the gel electrolyte composition may be tested by a method known in the art. For example, the viscosity of a slurry is measured by using a rotational viscometer. An exemplary test method includes: Selecting an appropriate rotor, fixing the viscometer rotor in place, putting the slurry below the viscometer rotor, and leaving the slurry to just submerge the scale line of the rotor, where the instrument model is: Shanghai Fangrui NDJ-5S; rotor: 63# (2000 to 10000 mPa·s), 64# (10000 to 50000 mPa·s); rotational speed: 12 rpm; and test duration: 5 min; and collecting the data when the readout becomes steady.

The gel electrolyte composition falls within an appropriate viscosity range, thereby providing an ion transport channel and improving the ionic conductivity, and furthermore, achieving relatively high safety, preventing the solvent in the electrolyte composition from generating a large amount of gas, improving the safety of the battery, and efficiently exerting the advantages of both the liquid electrolyte and the all-solid electrolyte. The gel electrolyte composition falls within an appropriate viscosity range, thereby increasing the interface wettability of the battery and the interface kinetics of the gel electrolyte composition at a room temperature and a high temperature, and on the other hand, alleviating interface side reactions of the gel electrolyte composition, and especially improving the Coulombic efficiency of the battery at a high temperature.

As used herein, the term "room temperature" means 5 °C to 35 °C.

As used herein, the term "high temperature" means 40 °C to 80 °C.

As used herein, Coulombic efficiency means an average Coulombic efficiency, and is primarily used for representing an average of ratios of a discharge capacity to a charge capacity of a battery during cycling, and can reflect the degree of depletion of metal ions, and may be tested by any well-known method.

As used herein, ionic conductivity is primarily used for characterizing the ability of the gel electrolyte composition to transport ions, and can reflect the ability of the gel electrolyte composition to transport ions, and may be tested by any well-known method.

In some embodiments, the gel electrolyte composition includes a solvent. Based on a total amount of substance of the solvent, a percentage of an amount of substance of a free solvent to the total amount of substance of the solvent in the gel electrolyte composition, denoted as *n_{FS}*, satisfies: 0% < *n_{FS}* ≤ 70%. In some embodiments, based on the total amount of substance of the solvent, the percentage of the amount of substance of the free solvent to the total amount of substance of the solvent in the gel electrolyte composition, denoted as *n_{FS}*, is optionally 1%, 5%, 10%, 15%, 20%, 25%, 30%, 35%, 40%, 45%, 50%, 55%, 60%, 65%, or 70%.

In this application, the percentage of the amount of substance of the free solvent to the total amount of substance of the solvent in the gel electrolyte composition may be tested by a method known in the art. An exemplary test method is: Analyzing an infrared spectrum of the gel electrolyte composition by using a Nicolet iS5 Fourier transform infrared spectrometer, normalizing the spectrogram, and then recording the intensity of the characteristic peak of the solvent as I₁; measuring the infrared spectrum of the gel electrolyte composition by using the solvent of the gel electrolyte composition as a reference pattern, normalizing the spectrogram, and then recording the intensity of the corresponding characteristic peak of the solvent as I₂, so that the I₁/I₂ ratio is the percentage of the amount of substance of the free solvent to the total amount of substance of the solvent in the gel electrolyte composition. The characteristic peak of the solvent is selected depending on the type of the solvent. For an ether solvent, the characteristic peak of the C-O bond lies in the region of 800 to 900 cm⁻¹; for an ester solvent, the characteristic peak of the C=O bond lies in the region of 850 to 950 cm⁻¹ and the region of 1700 to 1800 cm⁻¹. As used herein, the term "solvent" means any liquid in which a solid, liquid, or gaseous solute can be dissolved. Solvents include free solvents and non-free solvents.

As used herein, the term "free solvent" means a solvent molecule that is freely movable without coordination with anions or cations and without hydrogen bonding or hydrogen-like bonding interactions with other solvent molecules. As an example, the free solvent is precluded from: participating in forming a solvation structure of the electrolyte salt; coordinating with the anions or cations of the electrolyte salt; participating in the swelling of the polymer; and exerting an strong effect of binding to other functional groups.

As used herein, the term "non-free solvent" means a solvent molecule coordinating to anions and cations or undergoing hydrogen bonding or hydrogen-like bonding interactions with other solvent molecules, thereby being unable to move freely. Controlling the percentage of the amount of substance of the free solvent to the total amount of substance of the solvent in the gel electrolyte composition to fall within an appropriate range ensures that the gel electrolyte composition possesses a relatively high ionic conductivity and is excellent in interface kinetics and a mass transfer process, thereby improving the ionic conductivity of the gel electrolyte composition at a room temperature and a high temperature, and at the same time, avoiding an increase in the gas production amount that is caused by an excessive percentage of the amount of substance of the free solvent and that leads to an increase in the expansion rate of the battery and a decline in the safety of the battery.

In some embodiments, based on the total mass of the gel electrolyte composition, the mass percent of the solvent is 20% to 75%. In some embodiments, based on the total mass of the gel electrolyte composition, the mass percent of the solvent is optionally 20%, 22%, 25%, 30%, 35%, 38%, 40%, 45%, 47%, 50%, 53%, 55%, 60%, 62%, 65%, 70%, or 75%.

The mass percent of the solvent based on the total mass of the gel electrolyte composition is controlled to fall within the range of 20% to 75%, thereby improving the ionic conductivity of the gel electrolyte composition at a room temperature and a high temperature, improving the Coulombic efficiency of the battery at a room temperature and a high temperature as well as the cycle performance of the battery at a room temperature, and broadening the temperature range in which the battery is applicable.

In some embodiments, the gel electrolyte composition further includes an electrolyte salt. Based on a total mass of the gel electrolyte composition, a mass percent of the electrolyte salt is 5% to 70%. In some embodiments, based on the total mass of the gel electrolyte composition, the mass percent of the electrolyte salt is optionally 5%, 10%, 15%, 20%, 25%, 30%, 35%, 40%, 45%, 50%, 55%, 60%, 65%, or 70%.

The mass percent of the electrolyte salt based on the total mass of the gel electrolyte composition is controlled to fall within the range of 5% to 70%, thereby improving the ionic conductivity of the gel electrolyte composition at a room temperature and a high temperature, improving the Coulombic efficiency of the battery at a room temperature and a high temperature as well as the cycle performance of the battery at a room temperature, and broadening the temperature range in which the battery is applicable.

In some embodiments, the gel electrolyte composition further includes a polymer. Based on the total mass of the gel electrolyte composition, the mass percent of the polymer is 2% to 20%. In some embodiments, based on the total mass of the gel electrolyte composition, the mass percent of the polymer is optionally 2%, 4%, 5%, 8%, 10%, 12%, 14%, 15%, 16%, 18%, or 20%.

The mass percent of the polymer based on the total mass of the gel electrolyte composition is controlled to fall within the range of 2% to 20%, thereby improving the ionic conductivity of the gel electrolyte composition at a room temperature and a high temperature, improving the Coulombic efficiency of the battery at a room temperature and a high temperature as well as the cycle performance of the battery at a room temperature, and broadening the temperature range in which the battery is applicable.

In some embodiments, the gel electrolyte composition is a supersaturated gel electrolyte composition at 25 °C.

The supersaturated gel electrolyte composition is a gel electrolyte composition with an electrolyte salt dissolved therein exceeding a saturated concentration and partially precipitating out at a room temperature (5 °C to 30 °C).

The supersaturated gel electrolyte composition possesses a higher concentration of the electrolyte salt than other types of gel electrolyte compositions. With the increase of the temperature, the electrolyte salt particles precipitated in the supersaturated gel electrolyte composition are further dissolved to form a more stable battery system. Moreover, the supersaturated state of the supersaturated gel electrolyte composition can lead to a change in the structure or form of solvation of the electrolyte salt, thereby improving the chemical stability of the battery at a high temperature. In summary, the supersaturated gel electrolyte composition can improve the Coulombic efficiency and cycle performance of the battery at a high temperature, reduce the gas production amount of the battery at a high temperature, and improve both the electrochemical performance and safety performance of the battery at a high temperature concurrently.

In some embodiments, a viscosity of the supersaturated gel electrolyte composition at 25 °C is 3000 mPa·s to 100000 mPa·s, and the viscosity of the supersaturated gel electrolyte composition at 60 °C is 500 mPa·s to 5000 mPa·s.

In some embodiments, a viscosity of the supersaturated gel electrolyte composition at 25 °C is 3000 mPa·s to 11000 mPa·s, and the viscosity of the supersaturated gel electrolyte composition at 60 °C is 500 mPa·s to 3000 mPa·s.

In some embodiments, the viscosity of the supersaturated gel electrolyte composition at 25 °C is optionally 3000 mPa·s, 4000 mPa·s, 5000 mPa·s, 6000 mPa·s, 7000 mPa·s, 8000 mPa·s, 9000 mPa·s, 10000 mPa·s, 20000 mPa·s, 30000 mPa·s, 40000 mPa·s, 50000 mPa·s, 60000 mPa·s, 70000 mPa·s, 80000 mPa·s, 90000 mPa·s, or 100000 mPa·s. The viscosity of the supersaturated gel electrolyte composition at 60 °C is optionally 500 mPa·s, 600 mPa·s, 700 mPa·s, 800 mPa·s, 900 mPa·s, 1000 mPa·s, 1500 mPa·s, 2000 mPa·s, 2500 mPa·s, or 3000 mPa·s.

The supersaturated gel electrolyte composition falls within an appropriate viscosity range, thereby improving the ionic conductivity of the supersaturated gel electrolyte composition at a room temperature and a high temperature, improving the Coulombic efficiency of the battery at 60 °C, and broadening the temperature range in which the battery is applicable.

In some embodiments, the supersaturated gel electrolyte composition includes a dissolved electrolyte salt and a crystallized electrolyte salt.

As used herein, "crystallized electrolyte salt" means an electrolyte salt partially precipitating as solid crystals due to a concentration of the electrolyte salt exceeding the saturated concentration.

The crystallized electrolyte salt in a dispersed phase is uniformly diffused in a continuous phase of the supersaturated gel electrolyte composition, thereby further improving the mechanical performance of the supersaturated gel electrolyte composition.

In some embodiments, a median particle diameter of the crystallized electrolyte salt is less than or equal to 100 µm. In some embodiments, the median particle diameter of the crystallized electrolyte salt is optionally 1 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm.

In this application, the median particle diameter of the crystallized electrolyte salt may be tested by a method known in the art. An exemplary test method includes: Measuring the median particle diameter by using a centrifugal sedimentation method and a laser particle size analyzer; first, centrifuging, depositing, and filtering the specimen to obtain a crystallized electrolyte salt, and then weighing out 0.1 g to 0.13 g of crystallized electrolyte salt specimen by using a 50 mL beaker, adding 5 g of acetone, putting a stirring rod of approximately 2.5 mm in diameter into the specimen, and then sealing the specimen with a cling film. Sonicating the specimen for 5 minutes and then transferring the specimen to a magnetic stirrer, stirring the specimen at 500 rpm for at least 20 minutes, and taking 2 specimens from each batch of products for testing. Testing the median particle diameter by using a laser particle size analyzer such as a Mastersizer 2000E laser particle size analyzer manufactured by Malvern Instruments Ltd., UK.

By controlling the median particle diameter of the crystallized electrolyte salt to be 100 µm or less, the crystallized electrolyte salt is prevented from settling down but is uniformly dispersed in the supersaturated gel electrolyte composition system, thereby improving the mechanical performance of the supersaturated gel electrolyte composition and preventing oversized particles from hindering ion transport.

In some embodiments, based on a total mass of the supersaturated gel electrolyte composition, a mass percent of the electrolyte salt is 30% to 70%, a mass percent of the solvent is 20% to 60%, and a mass percent of the polymer is 2% to 20%. In some embodiments, based on the total mass of the supersaturated gel electrolyte composition, the mass percent of the electrolyte salt is optionally 30%, 35%, 40%, 45%, 50%, 55%, 60%, 65%, or 70%; the mass percent of the solvent is optionally 20%, 22%, 25%, 27%, 30%, 32%, 35%, 38%, 40%, 45%, 47%, 50%, 53%, 55%, 57%, or 60%; and the mass percent of the polymer is optionally 2%, 4%, 5%, 8%, 10%, 12%, 14%, 15%, 16%, 18%, or 20%.

Based on the total mass of the supersaturated gel electrolyte composition, the mass percent of the electrolyte salt is controlled to be 30% to 70%, the mass percent of the solvent is controlled to be 20% to 60%, and the mass percent of the polymer is controlled to be 2% to 20%, thereby improving the ionic conductivity of the supersaturated gel electrolyte composition at a room temperature and a high temperature, and improving the Coulombic efficiency of the battery at 60 °C.

In some embodiments, the electrolyte salt includes a sodium salt. The sodium salt includes one or more of sodium chloride, sodium bromide, sodium nitrate, sodium perchlorate, sodium hexafluorophosphate, sodium tetrafluoroborate, sodium tetrafluoroyttrate, sodium hexafluoroarsenate, sodium tetraphenylborate, sodium acetate, sodium trifluoroacetate, sodium trifluoromethanesulfonate, sodium bis(fluorosulfonyl)imide, sodium bis(trifluoromethanesulfonyl)imide, or sodium (n-perfluorobutylsulfonyl)imide, and optionally includes one or more of sodium hexafluorophosphate, sodium trifluoromethanesulfonate, sodium bis(fluorosulfonyl)imide, or sodium bis(trifluoromethanesulfonyl)imide.

In some embodiments, the sodium salt includes sodium chloride. In some embodiments, the sodium salt includes sodium bromide. In some embodiments, the sodium salt includes sodium hexafluorophosphate. In some embodiments, the sodium salt includes sodium tetrafluoroborate. In some embodiments, the sodium salt includes sodium trifluoromethanesulfonate. In some embodiments, the sodium salt includes sodium bis(fluorosulfonyl)imide. In some embodiments, the sodium salt includes sodium bis(fluorosulfonyl)imide and sodium bis(trifluoromethanesulfonyl)imide. In some embodiments, the sodium salt includes sodium tetrafluoroborate and sodium bis(fluorosulfonyl)imide.

All of the above sodium salts can improve the Coulombic efficiency of the battery at 60 °C and 80 °C and the performance of the battery. The sodium salt includes one or more of sodium hexafluorophosphate, sodium trifluoromethanesulfonate, sodium bis(fluorosulfonyl)imide, or sodium bis(trifluoromethanesulfonyl)imide, thereby further improving the Coulombic efficiency of the battery at 60 °C and the cycle performance of the battery at 25 °C and 60 °C, and improving the battery performance significantly.

In some embodiments, the solvent includes one or more of an ether organic solvent, an ester organic solvent, or a sulfur-containing organic solvent; and the solvent includes one or more of monoglyme, diglyme, triglyme, tetraglyme, tetrahydrofuran, 1,3-dioxolane, ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propane sultone, methyl propionate, methyl butyrate, ethyl acetate, ethyl propionate, propyl propionate, ethyl butyrate, or dimethyl sulfoxide, and optionally includes one or more of monoglyme, tetrahydrofuran, or 1,3-dioxolane.

In some embodiments, the solvent includes monoglyme. In some embodiments, the solvent includes diglyme. In some embodiments, the solvent includes triglyme. In some embodiments, the solvent includes tetraglyme. In some embodiments, the solvent includes tetrahydrofuran. In some embodiments, the solvent includes 1,3-dioxolane. In some embodiments, the solvent includes ethylene carbonate. In some embodiments, the solvent includes monoglyme and tetrahydrofuran. In some embodiments, the solvent includes monoglyme and 1,3-dioxolane.

All of the above solvents can improve the Coulombic efficiency of the battery at 60 °C. The solvent is one or more selected from monoglyme, tetrahydrofuran, or 1,3-dioxolane, thereby further improving the Coulombic efficiency of the battery at a room temperature and a high temperature, improving the cycle performance of the battery at 25 °C and 60 °C, reducing the thickness expansion rate of the battery cycled at 25 °C and 60 °C, reducing the gas production amount, and improving the performance and safety of the battery significantly.

In this application, the thickness expansion rate is primarily used for characterizing the storage performance of a battery, and can reflect the gas production amount and stability of the battery, and may be tested by any well-known method.

In some embodiments, the polymer includes one or more of polyethylene oxide, polyethylene glycol, polyvinylpyrrolidone, polymethyl methacrylate, polyvinylidene difluoride, polyvinyl alcohol, polyacrylonitrile, polyvinyl chloride, polyacrylamide, polytrimethylene carbonate, perfluoropolyether, or poly(vinylidene difluoride-co-hexafluoropropylene), and optionally includes one or more of polyethylene oxide, polyethylene glycol, perfluoropolyether, or poly(vinylidene difluoride-co-hexafluoropropylene).

In some embodiments, the polymer includes polyethylene oxide. In some embodiments, the polymer includes polyethylene glycol. In some embodiments, the polymer includes polyvinylpyrrolidone. In some embodiments, the polymer includes polymethyl methacrylate. In some embodiments, the polymer includes polyvinylidene difluoride. In some embodiments, the polymer includes poly(vinylidene fluoride-co-hexafluoropropylene). In some embodiments, the polymer includes perfluoropolyether. In some embodiments, the polymer includes perfluoropolyether and polyethylene oxide. In some embodiments, the polymer includes polyethylene glycol and polyethylene oxide.

All of the above polymers can improve the Coulombic efficiency of the battery at 25 °C and 60 °C and the cycle performance of the battery at 60 °C. The polymer is one or more selected from polyethylene oxide, polyethylene glycol, perfluoropolyether, or poly(vinylidene difluoride-co-hexafluoropropylene), thereby further reducing the thickness expansion rate of the battery cycled at 25 °C, reducing the gas production amount, and improving the safety of the battery significantly.

In some embodiments, the electrolyte salt includes one or more of sodium trifluoromethanesulfonate, sodium bis(fluorosulfonyl)imide, or sodium bis(trifluoromethanesulfonyl)imide; the solvent includes one or more of monoglyme, tetrahydrofuran, or 1,3-dioxolane; and the polymer includes one or more of polyethylene oxide, polyethylene glycol, perfluoropolyether, or poly(vinylidene difluoride-co-hexafluoropropylene).

In some embodiments, the electrolyte salt includes sodium trifluoromethanesulfonate, the solvent includes monoglyme, and the polymer includes polyethylene oxide. In some embodiments, the electrolyte salt includes sodium bis(fluorosulfonyl)imide, the solvent includes monoglyme, and the polymer includes polyethylene oxide. In some embodiments, the electrolyte salt includes sodium bis(fluorosulfonyl)imide, the solvent includes tetrahydrofuran, and the polymer includes polyethylene oxide. In some embodiments, the electrolyte salt includes sodium bis(fluorosulfonyl)imide, the solvent includes monoglyme, and the polymer includes polyethylene glycol. In some embodiments, the electrolyte salt includes sodium bis(fluorosulfonyl)imide, the solvent includes monoglyme, and the polymer includes perfluoropolyether. In some embodiments, the electrolyte salt includes sodium bis(fluorosulfonyl)imide, the solvent includes monoglyme, and the polymer includes poly(vinylidene fluoride-co-hexafluoropropylene). In some embodiments, the electrolyte salt includes sodium bis(fluorosulfonyl)imide, the solvent includes monoglyme, and the polymer includes perfluoropolyether and polyethylene oxide.

The gel electrolyte composition endows the battery with a high level of both electrical performance and safety performance.

### [Positive electrode plate]

The positive electrode plate includes a positive current collector and a positive active material layer formed on at least a part of surfaces of the positive current collector. The positive active material layer includes a positive active material. The positive active material may include at least one of a layered transition metal oxide, a polyanionic compound, or a Prussian blue compound.

The transition metal in the layered transition metal oxide may be at least one of Mn, Fe, Ni, Co, Cr, Cu, Ti, Zn, V, Zr, or Ce. Optionally, the layered transition metal oxide is, for example, NaₓMO₂, where M is one or more of Ti, V, Mn, Co, Ni, Fe, Cr, or Cu, and 0 < x ≤ 1.

The polyanionic compound may be a type of compound containing a metal ion, a transition metal ion, and a tetrahedral (YO₄)ⁿ⁻ anion unit. The metal ion is optionally one of a sodium ion, a lithium ion, a potassium ion, or a zinc ion. The transition metal is optionally at least one of Mn, Fe, Ni, Co, Cr, Cu, Ti, Zn, V, Zr, or Ce. Y is optionally at least one of P, S, or Si; and n denotes a valence of (YO₄)ⁿ⁻.

The Prussian blue compound may be a compound containing a sodium ion, a transition metal ion, or a cyano ion (CN⁻). The transition metal may be at least one of Mn, Fe, Ni, Co, Cr, Cu, Ti, Zn, V, Zr, or Ce. For example, the Prussian blue compound is NaₐMe_{b}Me'_{c}(CN)₆, where Me and Me' each are independently at least one of Ni, Cu, Fe, Mn, Co, or Zn, 0 < a ≤ 2, 0 < b < 1, and 0 < c < 1.

In some embodiments, the positive electrode plate includes a positive active material. The positive active material includes at least one of a layered transition metal oxide, a polyanionic compound, or a Prussian blue compound, including one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, or NaMnFe(CN)₆.

All of the above positive active materials endow the battery with excellent electrical performance.

In some embodiments, a surface of a positive active material is coated with a coating layer. The coating layer includes one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, or aluminum fluoride; and the carbon material includes one or more of amorphous carbon, graphite, or graphene.

As used herein, the term "amorphous carbon" means a carbon material graphitized and crystallized to a very low degree, approximating to an amorphous morphology, and assuming no specific shape or periodic structure pattern. As an example, amorphous carbon includes, but is not limited to, carbon black, charcoal, or coke.

As used herein, the term "graphite" means an allotrope of carbon, including natural graphite and artificial graphite.

As used herein, the term "graphene" means a carbon material formed by closely packing sp²-bonded carbon atoms into a monolayer two-dimensional honeycomb lattice structure. As an example, graphene includes, but is not limited to, monolayer graphene or multilayer graphene.

As used herein, the term "monolayer graphene" is a single-layer sheet structure formed by closely arranging carbon atoms periodically in a hexagonal honeycomb pattern. As an example, the thickness of the monolayer graphene is just 0.3 nm to 0.4 nm.

As used herein, the term "multilayer graphene" is prepared by stacking 2 to 10 layers of monolayer graphene, with a total thickness of less than 100 nm.

The surface of the positive active material is coated with a coating layer, thereby further improving the Coulombic efficiency of the battery at a room temperature and a high temperature, improving the cycle performance of the battery at 25 °C, reducing the thickness expansion rate of the battery cycled at 25 °C and 60 °C, reducing the gas production amount, and improving the performance and safety of the battery significantly.

The positive active material layer may further include a conductive agent to improve the conductivity of the positive electrode. The conductive agent is optionally one or more of Super P, acetylene black, carbon black, Ketjen black, carbon dots, carbon nanotubes, graphite, graphene, or carbon nanofibers.

The positive active material layer may include a binder to firmly bind the positive active material and optionally the conductive agent onto the positive current collector. The binder is optionally at least one of polyvinylidene difluoride (PVDF), polytetrafluoroethylene (PTFE), polyacrylic acid (PAA), polyvinyl alcohol (PVA), poly(ethylene-co-vinyl acetate) (EVA), styrene-butadiene rubber (SBR), carboxymethylcellulose (CMC), sodium alginate (SA), polymethacrylic acid (PMA), or carboxymethyl chitosan (CMCS).

The positive current collector may be a conductive carbon sheet, metal foil, carbon-coated metal foil, a porous metal sheet, or a composite current collector. The conductive carbon material of the conductive carbon sheet is optionally one or more of Super P, carbon black, Ketjen black, carbon dots, carbon nanotubes, graphite, graphene, or carbon nanofibers. The metal materials of the metal foil, the carbon-coated metal foil, and the porous metal sheet each are at least one independently selected from copper, aluminum, nickel, or stainless steel. The composite current collector may be a composite current collector formed by compounding metal foil and a polymer base film.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

The negative electrode plate may include a negative current collector alone without a negative active material.

In some embodiments, the negative current collector may be metal foil or a composite current collector. For example, the metal foil may be an aluminum foil or copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

### [Separator]

In some embodiments, the secondary battery further includes a separator. The type of the separator is not particularly limited in this application, and may be any well-known porous separator that is highly stable both chemically and mechanically.

In some embodiments, the material of the separator may be at least one selected from polyethylene, polypropylene, polyvinylidene fluoride, aramid fiber, polyethylene terephthalate, polytetrafluoroethylene, polyacrylonitrile, polyimide, polyamide, polyester, or natural fiber. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

### [Secondary battery]

The secondary battery includes a positive electrode plate and the gel electrolyte composition disclosed in some embodiments hereof.

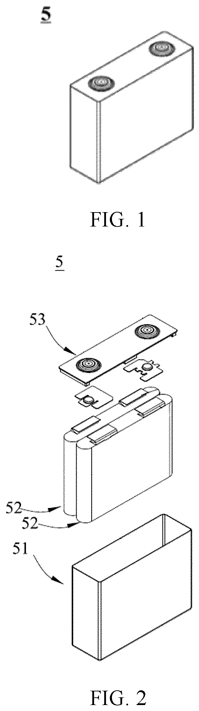

The shape of the secondary battery is not particularly limited in this application, and may be cylindrical, prismatic or any other shape. FIG. 2 shows a prismatic secondary battery 5 as an example.

In some embodiments, the secondary battery further includes a negative electrode plate and a separator.

In some embodiments, the secondary batteries include at least one of a lithium battery or a sodium battery.

In some embodiments, the secondary batteries include at least one of a potassium battery, a magnesium battery, or a zinc battery.

In some embodiments, the secondary battery is an anode-free sodium battery.

The anode-free sodium battery contains no negative active material, but contains just a negative current collector. During the initial charge, sodium ions gain electrons on a cathode side, and are deposited as metallic sodium on the surface of the current collector to form a sodium metal phase. During discharge, the metallic sodium can be converted into sodium ions and return to the positive electrode, thereby implementing charge-and-discharge cycles. Compared with a sodium-ion secondary battery and a sodium metal battery, the anode-free sodium battery can achieve a higher energy density due to no limitation by the negative electrode material. There is not enough sodium metal in an anode-free sodium battery to serve as a negative electrode material and provide enough sodium to the battery. Therefore, the gel electrolyte composition applied in the anode-free sodium battery can more effectively improve the cycle performance and safety performance of the secondary battery at normal/high temperatures.

In some embodiments, a CB value of the anode-free sodium battery is less than or equal to 0.1.

The CB value is a ratio of the capacity per unit area of the negative electrode plate to the capacity per unit area of the positive electrode plate in a secondary battery. The anode-free battery contains no negative active material. Therefore, the capacity per unit area of the negative electrode plate is relatively low, and the CB value of the secondary battery is less than or equal to 0.1.

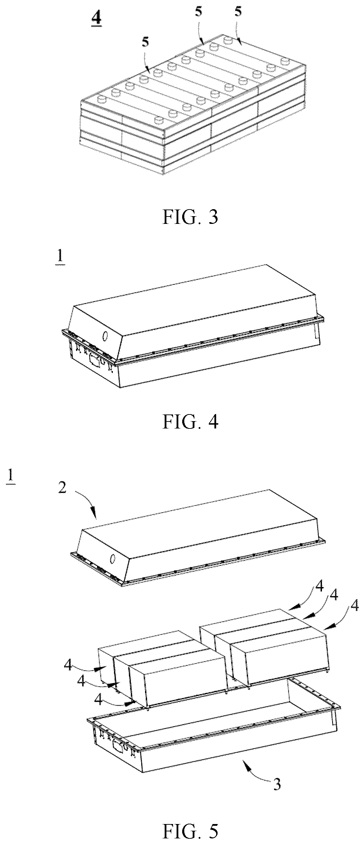

In some embodiments, referring to FIG. 3, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The gel electrolyte composition infiltrates in the electrode assembly 52. The number of electrode assemblies 52 in a secondary battery 5 may be one or more, and may be selected by a person skilled in the art as actually required.

### [Battery module]

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 4 shows a battery module 4 as an example. Referring to FIG. 4, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

### [Battery pack]

In some embodiments, the battery module may be assembled to form a battery pack. The battery pack may include one or more battery modules, and the specific number of battery modules in a battery pack may be selected by a person skilled in the art depending on practical applications and capacity of the battery pack.

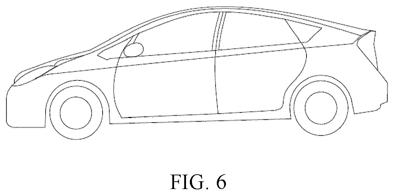

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

### [Electrical device]

According to an embodiment of this application, an electrical device is provided. The electrical device includes at least one of the secondary battery disclosed in any embodiment described above, the battery module disclosed in any embodiment described above, or the battery pack disclosed in any embodiment described above.

The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 7 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### I. Preparation methods

### Embodiment 1

### 1) Preparing a gel electrolyte composition

Mixing polyethylene oxide (PEO, with a weight-average molecular weight of 600000), sodium bis(fluorosulfonyl)imide (NaFSI), and a monoglyme (DME) solvent at a mass ratio of 1: 1: 3 at a room temperature in a dry argon atmosphere, and stirring well to completely dissolve the NaFSI to obtain a gel electrolyte composition.

### 2) Preparing a positive electrode plate

Mixing a Na₄Fe₃(PO₄)₂P₂O₇ (NFPP) material, carbon black as a conductive agent, and polyvinylidene fluoride as a binder in an N-methyl-pyrrolidone (NMP) solvent at a mass ratio of 8: 1: 1, and stirring well to obtain a positive electrode slurry in which the solid content is 73%. Subsequently, coating a surface of a positive current collector aluminum foil with the positive electrode slurry, and performing drying, cold-pressing, and slitting to obtain a positive electrode plate.

### 3) Preparing a negative electrode plate

Adding carbon nanotubes and carboxymethyl cellulose (CMC) at a mass ratio of 5: 2 into deionized water, and stirring well to form a homogeneous slurry. Applying the slurry onto a negative current collector copper foil. Oven-drying the slurry, and cutting the foil to obtain a negative electrode plate without a negative electrode structure.

### 4) Separator

Using a polypropylene film as a separator.

### 5) Preparing a full-cell

In a case that a gel electrolyte composition of a viscosity lower than 1000 mPa·s or a liquid electrolyte is applied, the preparation process includes: Stacking the positive electrode plate, the separator, and the current collector sequentially in such a way that the separator is located between the positive current collector and the negative current collector to serve a function of separation, and then winding the stacked structure to obtain a bare cell; welding tabs onto the bare cell, and putting the bare cell into an aluminum shell; dehydrating the cell by drying the cell at 80 °C, and then injecting the electrolyte into the aluminum shell package and sealing the package to obtain an uncharged cell. Performing steps such as static standing, hot- and cold-pressing, chemical formation, shaping, and capacity test on the uncharged cell to produce an anode-free sodium metal battery product in Embodiment 1.

In a case that a gel electrolyte composition of a viscosity higher than 1000 mPa·s or an all-solid electrolyte is applied, the preparation process includes: Tape-casting the electrolyte onto two sides of the separator, and then stacking the positive electrode plate, the separator coated with the electrolyte, and the current collector sequentially in such a way that the separator coated with the electrolyte is located between the positive electrode plate and the negative electrode plate to serve a function of separation, and then winding the stacked structure to obtain a bare cell; welding tabs onto the bare cell, and putting the bare cell into an aluminum shell; and dehydrating the cell by drying the cell at 80 °C to obtain an uncharged cell. Performing steps such as static standing, hot- and cold-pressing, chemical formation, shaping, and capacity test on the uncharged cell to obtain an anode-free sodium battery product in Embodiment 1.

### 6) Preparing a button battery

In a case that a gel electrolyte composition of a viscosity lower than 1000 mPa·s or a liquid electrolyte is applied, the preparation process includes: Stacking a negative current collector, a separator, and a sodium sheet sequentially in such a way that the separator is located between the negative current collector and the sodium sheet to serve a function of separation, and then injecting the electrolyte into the package to obtain a button battery.

In a case that a gel electrolyte composition of a viscosity higher than 1000 mPa·s or an all-solid electrolyte is applied, the preparation process includes: Stacking a negative current collector, a separator (both sides of the separator are coated with the electrolyte by tape-casting), and a sodium sheet sequentially in such a way that the separator and the electrolyte are located between the negative current collector and the sodium sheet to serve a function of separation, and then sealing the package to obtain a button battery.

### Embodiments 2 to 4

The batteries in Embodiments 2 to 4 are prepared by a method similar to the battery preparation method in Embodiment 1 except adjusted mass percentages of the sodium salt, the polymer, and the solvent. The specific parameters are set out in Table 1.

### Embodiment 5

The battery in Embodiment 5 is prepared by a method similar to the battery preparation method in Embodiment 1 except that the gel electrolyte composition is prepared by the following method:

Mixing polyethylene oxide (PEO, with a weight-average molecular weight of 600000), sodium bis(fluorosulfonyl)imide (NaFSI), and a monoglyme (DME) solvent at a mass ratio of 1: 6: 3 at 60 °C in a dry argon atmosphere, and stirring well to completely dissolve the NaFSI, and then cooling the mixture to obtain a supersaturated gel electrolyte composition at a room temperature.

### Embodiments 6 to 9

The batteries in Embodiments 6 to 9 are prepared by a method similar to the battery preparation method in Embodiment 5 except adjusted mass percentages of the sodium salt, the polymer, and the solvent. The specific parameters are set out in Table 1.

### Embodiments 10 to 14

The batteries in Embodiments 10 to 14 are prepared by a method similar to the battery preparation method in Embodiment 1 except the adjusted type of the sodium salt. The specific parameters are set out in Table 1.

### Embodiments 15 to 17

The batteries in Embodiments 15 to 17 are prepared by a method similar to the battery preparation method in Embodiment 1 except the adjusted type of the solvent. The specific parameters are set out in Table 1.

### Embodiments 18 to 22

The batteries in Embodiments 18 to 22 are prepared by a method similar to the battery preparation method in Embodiment 1 except the adjusted type of the polymer. The specific parameters are set out in Table 1.

### Embodiment 23

The battery in Embodiment 23 is prepared by a method similar to the battery preparation method in Embodiment 1 except that the gel electrolyte composition is prepared by the following method:

Mixing polyethylene oxide (PEO, with a weight-average molecular weight of 600000), polyethylene glycol (PEG, with a weight-average molecular weight of 10000), sodium bis(fluorosulfonyl)imide (NaFSI), and a monoglyme (DME) solvent at a mass ratio of 1: 1: 2: 6 in a dry argon atmosphere, and stirring well to completely dissolve the NaFSI to obtain a gel electrolyte composition.

### Embodiments 24 to 26

The batteries in Embodiments 24 to 26 are prepared by a method similar to the battery preparation method in Embodiment 5 except the adjusted type and mass percent of the sodium salt. The specific parameters are set out in Table 1.

### Embodiments 27 to 28

The batteries in Embodiments 27 to 28 are prepared by a method similar to the battery preparation method in Embodiment 5 except the adjusted type and mass percent of the polymer. The specific parameters are set out in Table 1.

### Embodiments 29 to 30

The batteries in Embodiments 29 to 30 are prepared by a method similar to the battery preparation method in Embodiment 5 except the adjusted type of the positive active material. The specific parameters are set out in Table 1.

### Embodiments 31 to 32

The batteries in Embodiments 31 to 32 are prepared by a method similar to the battery preparation method in Embodiment 1 except the adjusted type of the positive active material. The specific parameters are set out in Table 1.

### Comparative Embodiment 1

The battery in Comparative Embodiment 1 is prepared by a method similar to the battery preparation method in Embodiment 1 except that a liquid electrolyte is prepared without adding a polymer. The specific parameters are set out in Table 1.

### Comparative Embodiment 2

The battery in Comparative Embodiment 2 is prepared by a method similar to the battery preparation method in Comparative Embodiment 1 except the adjusted type of the solvent. The specific parameters are set out in Table 1.

### Comparative Embodiment 3

The battery in Comparative Embodiment 3 is prepared by a method similar to the battery preparation method in Comparative Embodiment 1 except the adjusted type of the sodium salt. The specific parameters are set out in Table 1.

### Comparative Embodiments 4 to 5

The batteries in Comparative Embodiments 4 to 5 are prepared by a method similar to the battery preparation method in Comparative Embodiment 1 except the adjusted mass percent of the sodium salt. The specific parameters are set out in Table 1.

### Comparative Embodiment 6

The battery in Comparative Embodiment 6 is prepared by a method similar to the battery preparation method in Embodiment 1 except that an all-solid electrolyte composition is prepared by oven-drying the gel electrolyte composition and fully removing the solvent. The specific parameters are set out in Table 1.

### Comparative Embodiment 7

The battery in Comparative Embodiment 7 is prepared by a method similar to the battery preparation method in Embodiment 6 except the adjusted mass percent of the sodium salt. The specific parameters are set out in Table 1.

### II. Performance test

### 1. Testing the performance of the gel electrolyte composition

### 1) Testing the viscosity at different temperatures

Leaving the prepared gel electrolyte composition to stand for 10 minutes, measuring the viscosity of the gel electrolyte composition for a first time by using a Dveslvtjo rotational viscosity meter (manufactured by BROOKFIELD), and recording the viscosity value, where the test conditions are: 25 °C, 40 °C, 60 °C, or 80 °C; rotational speed: 12 rpm; to measure a viscosity not lower than 2000 mPa·s, a 64# rotor is applied; to measure a viscosity lower than 2000 mPa·s, a 62# rotor is applied. Obtaining three measured values in parallel, averaging out the values.

### 2) Testing the content of the free solvent

Analyzing an infrared spectrum of the gel electrolyte composition by using a Nicolet iS5 Fourier transform infrared spectrometer, and normalizing the spectrogram, and then recording the intensity of the characteristic peak of the solvent as I₁. measuring the infrared spectrum of the gel electrolyte composition by using the solvent of the gel electrolyte composition as a reference pattern, normalizing the spectrogram, and then recording the intensity of the corresponding characteristic peak of the solvent as I₂, so that the I₁/I₂ ratio is the percentage of the amount of substance of the free solvent to the amount of substance of the solvent in the gel electrolyte composition. The characteristic peak of the solvent is selected depending on the type of the solvent. For an ether solvent, the characteristic peak of the C-O bond lies in the region of 800 to 900 cm⁻¹; for an ester solvent, the characteristic peak of the C=O bond lies in the region of 850 to 950 cm⁻¹ and the region of 1700 to 1800 cm⁻¹, where the characteristic peak exhibited in the region of 850 to 950 cm⁻¹ applies in comparing the peak intensity.

### 3) Testing the median particle diameter of the crystallized electrolyte salt in the supersaturated gel electrolyte composition

Measuring the median particle diameter by using a centrifugal sedimentation method and a laser particle size analyzer; first, centrifuging, depositing, and filtering the specimen to obtain a crystallized electrolyte salt, and then weighing out 0.1 g to 0.13 g of crystallized electrolyte salt specimen by using a 50 mL beaker, adding 5 g of acetone, putting a stirring rod of approximately 2.5 mm in diameter into the specimen, and then sealing the specimen with a cling film. Sonicating the specimen for 5 minutes and then transferring the specimen to a magnetic stirrer, stirring the specimen at 500 rpm for at least 20 minutes, and taking 2 specimens from each batch of products for testing. Testing the median particle diameter by using a laser particle size analyzer such as a Mastersizer 2000E laser particle size analyzer manufactured by Malvern Instruments Ltd., UK.

### 2. Testing the battery performance

### 1) Testing the ionic conductivity at different temperatures

A process of testing the ionic conductivity of a gel electrolyte composition with a viscosity higher than 1000 mPa·s and an all-solid electrolyte is as follows: Measuring the ohmic impedance of the button battery by using a 1470 multi-channel electrochemical workstation (manufactured by UK-based Solartron Metrology), where the positive electrode plate and the negative electrode plate of the button battery are a platinum foil or titanium foil of the same area, and the test conditions are: the test temperature is 25 °C, 40 °C, 60 °C, or 80 °C; the frequency range is 1 Hz to 1 MHz; the infinitesimal disturbance signal is 5 mV. Calculating the ionic conductivity as: ionic conductivity = (electrolyte thickness + separator thickness)/(area of the electrolyte × ohmic impedance of the electrolyte). The test process for the comparative embodiment and other embodiments is the same as above.

A process of testing the ionic conductivity of a gel electrolyte composition with a viscosity lower than 1000 mPa·s and a liquid electrolyte is as follows: Measuring the ohmic impedance of the button battery by using a 1470 multi-channel electrochemical workstation (manufactured by UK-based Solartron Metrology), where the separator in the battery includes at least three layers, and the test conditions are: the test temperature is 25 °C, 40 °C, 60 °C, or 80 °C; the frequency range is 1 Hz to 1 MHz; the infinitesimal disturbance signal is 5 mV. Calculating the ionic conductivity as: ionic conductivity = total thickness of all layers of the separator/(area of the electrolyte × ohmic impedance of the electrolyte).

### 2) Testing the Coulombic efficiency at different temperatures

A process of testing the Coulombic efficiency is as follows: Performing a charge-discharge cycle for a prepared full-cell at the specified C-rate and the specified voltage at 25 °C, 40 °C, 60 °C, or 80 °C, repeating the charging and discharging operations for a number of cycles until the capacity retention rate fades to 80%, and recording the number of cycles at this time as n. Calculating the Coulombic efficiency in each cycle as: single-cycle Coulombic efficiency = discharge capacity (Cd1)/charge capacity (Cc1) × 100%, and calculating the average of the Coulombic efficiency values from the second cycle to the n^{th} cycle as the Coulombic efficiency of the full-cell to characterize the stability of the battery performance during cycling. The test process for the comparative embodiment and other embodiments is the same as above.

### 3) Testing the number of cycles counted when the room/high-temperature capacity retention rate fades to 80%

A process of testing the room/high-temperature cycle capacity retention rate is as follows: Charging a prepared full-cell at a constant current of 1C in a 25 °C or 60 °C and normal-pressure (0.1 MPa) environment until the voltage reaches 4 V (in a case of a layered oxide positive electrode) or 3.7 V (in a case of a ferric sodium pyrophosphate positive electrode), and then charging the cell at a constant voltage of 4 V or 3.7 V until the current drops to 0.01C, and then discharging the cell at a constant current of 1C until the voltage drops to 3.0 V, thereby completing one charge-discharge cycle. Repeating the charging and discharging operations for a number of cycles. Stopping the charging and discharging operations when the discharge capacity fades to 80% against a first-cycle discharge capacity regarded as 100%, recording the number of cycles counted when the capacity retention rate fades to 80%, and using the number of cycles as an indicator of the cycle performance of the full-cell. The test process for the comparative embodiment and other embodiments is the same as above.

### 4) Testing the room/high-temperature storage performance

Leaving a prepared full-cell to stand for 30 minutes at 25 °C or 60 °C, and then charging the cell at a constant current rate of 0.1C until the voltage reaches 4 V, and then charging the cell at a constant voltage of 4 V until the current drops to 0.01C. Leaving the cell to stand for 5 minutes, and measuring the thickness of the full-cell. Storing the cell at 25 °C or 60 °C for 60 days, and measuring the thickness of the full-cell. Calculating the thickness expansion rate of the battery as: thickness expansion rate of the full-cell = [(thickness after storage - thickness before storage)/thickness before storage] × 100 %. The test process for the comparative embodiment and other embodiments is the same as above.

### III. Analysis on the test results of embodiments and comparative embodiments

The batteries described in the embodiments and the comparative embodiments are prepared according to the foregoing methods respectively, and performance parameters of the batteries are measured. The test results are shown in Table 1, Table 2, and Table 3 below.

**Table 1**

| Serial number | Gel electrolyte composition | | | | | | Positive electrode plate |
|---|---|---|---|---|---|---|---|
| | Sodium salt | Content (%) | Solvent | Content (%) | Polymer | Content (%) | Positive active material |
| Embodiment 1 | Sodium bis(fluorosulfonyl)imide | 20 | Monoglyme | 60 | Polyethylene oxide | 20 | Na₄Fe₃(PO₄)₂P₂O₇ |
| Embodiment 2 | Sodium bis(fluorosulfonyl)imide | 10 | Monoglyme | 75 | Polyethylene oxide | 15 | Na₄Fe₃(PO₄)₂P₂O₇ |
| Embodiment 3 | Sodium bis(fluorosulfonyl)imide | 5 | Monoglyme | 75 | Polyethylene oxide | 20 | Na₄Fe₃(PO₄)₂P₂O₇ |
| Embodiment 4 | Sodium bis(fluorosulfonyl)imide | 25 | Monoglyme | 55 | Polyethylene oxide | 20 | Na₄Fe₃(PO₄)₂P₂O₇ |
| Embodiment 5 | Sodium bis(fluorosulfonyl)imide | 60 | Monoglyme | 30 | Polyethylene oxide | 10 | Na₄Fe₃(PO₄)₂P₂O₇ |
| Embodiment 6 | Sodium bis(fluorosulfonyl)imide | 65 | Monoglyme | 25 | Polyethylene oxide | 10 | Na₄Fe₃(PO₄)₂P₂O₇ |
| Embodiment 7 | Sodium bis(fluorosulfonyl)imide | 70 | Monoglyme | 20 | Polyethylene oxide | 10 | Na₄Fe₃(PO₄)₂P₂O₇ |
| Embodiment 8 | Sodium bis(fluorosulfonyl)imide | 60 | Monoglyme | 25 | Polyethylene oxide | 15 | Na₄Fe₃(PO₄)₂P₂O₇ |
| Embodiment 9 | Sodium bis(fluorosulfonyl)imide | 60 | Monoglyme | 35 | Polyethylene oxide | 5 | Na₄Fe₃(PO₄)₂P₂O₇ |
| Embodiment 10 | Sodium chloride | 20 | Monoglyme | 60 | Polyethylene oxide | 20 | Na₄Fe₃(PO₄)₂P₂O₇ |
| Embodiment 11 | Sodium tetrafluoroborate | 20 | Monoglyme | 60 | Polyethylene oxide | 20 | Na₄Fe₃(PO₄)₂P₂O₇ |
| Embodiment 12 | Sodium hexafluorophosphate | 20 | Monoglyme | 60 | Polyethylene oxide | 20 | Na₄Fe₃(PO₄)₂P₂O₇ |
| Embodiment 13 | Sodium trifluoromethanesulfonate | 20 | Monoglyme | 60 | Polyethylene oxide | 20 | Na₄Fe₃(PO₄)₂P₂O₇ |
| Embodiment 14 | Sodium bis(trifluoromethanesulfonyl)i mide | 20 | Monoglyme | 60 | Polyethylene oxide | 20 | Na₄Fe₃(PO₄)₂P₂O₇ |
| Embodiment 15 | Sodium bis(fluorosulfonyl)imide | 20 | Tetrahydrofuran | 60 | Polyethylene oxide | 20 | Na₄Fe₃(PO₄)₂P₂O₇ |
| Embodiment 16 | Sodium bis(fluorosulfonyl)imide | 20 | 1,3-dioxolane | 60 | Polyethylene oxide | 20 | Na₄Fe₃(PO₄)₂P₂O₇ |
| Embodiment 17 | Sodium bis(fluorosulfonyl)imide | 20 | Ethylene carbonate | 60 | Polyethylene oxide | 20 | Na₄Fe₃(PO₄)₂P₂O₇ |
| Embodiment 18 | Sodium bis(fluorosulfonyl)imide | 20 | Monoglyme | 60 | Poly(vinylidene difluoride-co-hexafluoropropylene) | 20 | Na₄Fe₃(PO₄)₂P₂O₇ |
| Embodiment 19 | Sodium bis(fluorosulfonyl)imide | 20 | Monoglyme | 60 | Perfluoropolyether | 20 | Na₄Fe₃(PO₄)₂P₂O₇ |
| Embodiment 20 | Sodium bis(fluorosulfonyl)imide | 20 | Monoglyme | 60 | Polyethylene glycol | 20 | Na₄Fe₃(PO₄)₂P₂O₇ |
| Embodiment 21 | Sodium bis(fluorosulfonyl)imide | 20 | Monoglyme | 60 | Polyvinylpyrrolidone | 20 | Na₄Fe₃(PO₄)₂P₂O₇ |
| Embodiment 22 | Sodium bis(fluorosulfonyl)imide | 20 | Monoglyme | 60 | Perfluoropolyether + polyethylene oxide | 20 | Na₄Fe₃(PO₄)₂P₂O₇ |
| Embodiment 23 | Sodium bis(fluorosulfonyl)imide | 20 | Monoglyme | 60 | Polyethylene glycol + polyethylene oxide | 20 | Na₄Fe₃(PO₄)₂P₂O₇ |
| Embodiment 24 | Sodium chloride | 30 | Monoglyme | 50 | Polyethylene oxide | 20 | Na₄Fe₃(PO₄)₂P₂O₇ |
| Embodiment 25 | Sodium hexafluorophosphate | 30 | Monoglyme | 60 | Polyethylene oxide | 10 | Na₄Fe₃(PO₄)₂P₂O₇ |
| Embodiment 26 | Sodium trifluoromethanesulfonate | 70 | Monoglyme | 20 | Polyethylene oxide | 10 | Na₄Fe₃(PO₄)₂P₂O₇ |
| Embodiment 27 | Sodium bis(fluorosulfonyl)imide | 50 | Monoglyme | 30 | Polyethylene glycol | 20 | Na₄Fe₃(PO₄)₂P₂O₇ |
| Embodiment 28 | Sodium bis(fluorosulfonyl)imide | 40 | Monoglyme | 40 | Polyvinylpyrrolidone | 20 | Na₄Fe₃(PO₄)₂P₂O₇ |
| Embodiment 29 | Sodium bis(fluorosulfonyl)imide | 60 | Monoglyme | 30 | Polyethylene oxide | 10 | Na(Cu_{1/9}Ni_{2/9}Fe_{1/3}Mn_{1/3})O₂ |
| Embodiment 30 | Sodium bis(fluorosulfonyl)imide | 60 | Monoglyme | 30 | Polyethylene oxide | 10 | ZrO₂**-** and TiO₂-coated |
| | | | | | | | Na_{2/3}Ni_{1/6}Mn_{2/3}Cu_{1/9}Mg_{1/18} O₂ |
| Embodiment 31 | Sodium bis(fluorosulfonyl)imide | 20 | Monoglyme | 60 | Polyethylene oxide | 20 | Na(Cu_{1/9}Ni_{2/9}Fe_{1/3}Mn_{1/3})O₂ |
| Embodiment 32 | Sodium bis(fluorosulfonyl)imide | 20 | Monoglyme | 60 | Polyethylene oxide | 20 | ZrO₂**-** and TiO₂-coated |
| | | | | | | | Na_{2/3}Ni_{1/6}Mn_{2/3}Cu_{1/9}Mg_{1/18} O₂ |
| Comparative Embodiment 1 | Sodium bis(fluorosulfonyl)imide | 20 | Monoglyme | 80 | / | / | Na₄Fe₃(PO₄)₂P₂O₇ |
| Comparative Embodiment 2 | Sodium bis(fluorosulfonyl)imide | 20 | Ethylene carbonate | 80 | / | / | Na₄Fe₃(PO₄)₂P₂O₇ |
| Comparative Embodiment 3 | Sodium chloride | 20 | Monoglyme | 80 | / | / | Na₄Fe₃(PO₄)₂P₂O₇ |
| Comparative Embodiment 4 | Sodium bis(fluorosulfonyl)imide | 30 | Monoglyme | 70 | / | / | Na₄Fe₃(PO₄)₂P₂O₇ |
| Comparative Embodiment 5 | Sodium bis(fluorosulfonyl)imide | 40 | Monoglyme | 60 | / | / | Na₄Fe₃(PO₄)₂P₂O₇ |
| Comparative Embodiment 6 | Sodium bis(fluorosulfonyl)imide | 20 | / | / | Polyethylene oxide | 80 | Na₄Fe₃(PO₄)₂P₂O₇ |
| Comparative Embodiment 7 | Sodium bis(fluorosulfonyl)imide | 40 | / | / | Polyethylene oxide | 60 | Na₄Fe₃(PO₄)₂P₂O₇ |

**Table 2**

| Serial number | Gel electrolyte composition | | | | | | | | | |
|---|---|---|---|---|---|---|---|---|---|---|
| | Median particle diameter of crystallized sodium salt (µm) | Viscosity (mPa·S) | | | | Percentage of amount of substance of free solvent to total amount of substance of solvent at 25 °C (%) | Ionic conductivity of electrolyte (S·cm⁻¹) | | | |
| | | 25 °C | 40 °C | 60 °C | 80 °C | | 25 °C | 40 °C | 60 °C | 80 °C |
| Embodiment 1 | / | 550 | 498 | 437 | 358 | 52 | 3.1×10⁻² | 5.8×10⁻² | 8.3×10⁻² | 9.9×10⁻² |
| Embodiment 2 | / | 513 | 425 | 398 | 304 | 60 | 2.8×10⁻² | 4.0×10⁻² | 4.8×10⁻² | 6.7×10⁻² |
| Embodiment 3 | / | 533 | 468 | 419 | 329 | 68 | 1.1×10⁻² | 1.9×10⁻² | 2.8×10⁻² | 3.7×10⁻² |
| Embodiment 4 | / | 602 | 568 | 506 | 410 | 49 | 3.6×10⁻² | 6.7×10⁻² | 9.0×10⁻² | 1.5×10⁻¹ |
| Embodiment 5 | 61 | 6597 | 1578 | 1190 | 839 | 28 | 5.0×10⁻³ | 9.8×10⁻³ | 1.5×10⁻² | 2.1×10⁻² |
| Embodiment 6 | 73 | 9138 | 7623 | 1894 | 1033 | 22 | 3.2×10⁻³ | 5.2×10⁻³ | 1.2×10⁻² | 1.9×10⁻² |
| Embodiment 7 | 82 | 10007 | 8934 | 2356 | 1270 | 15 | 2.7×10⁻³ | 3.9×10⁻³ | 8.6×10⁻³ | 9.4×10⁻³ |
| Embodiment 8 | 66 | 8065 | 3736 | 2283 | 1365 | 29 | 4.8×10⁻³ | 8.8×10⁻³ | 9.2×10⁻³ | 1.1×10⁻² |
| Embodiment 9 | 88 | 5781 | 3230 | 1085 | 987 | 34 | 4.8×10⁻³ | 1.3×10⁻² | 2.0×10⁻² | 3.1×10⁻² |
| Embodiment 10 | / | 524 | 457 | 386 | 327 | 58 | 4.2×10⁻² | 5.9×10² | 9.2×10⁻² | 1.4×10⁻¹ |
| Embodiment 11 | / | 603 | 528 | 450 | 401 | 61 | 2.4×10⁻² | 4.5×10⁻² | 7.8×10⁻² | 9.9×10⁻² |
| Embodiment 12 | / | 715 | 519 | 466 | 398 | 59 | 2.9×10⁻² | 3.9×10⁻² | 6.5×10⁻² | 1.0×10⁻¹ |
| Embodiment 13 | / | 519 | 487 | 382 | 326 | 60 | 3.3×10⁻² | 5.5×10⁻² | 8.4×10⁻² | 1.2×10⁻² |
| Embodiment 14 | / | 594 | 516 | 420 | 385 | 62 | 4.8×10⁻² | 7.5×10⁻² | 9.7×10⁻² | 2.0×10⁻¹ |
| Embodiment 15 | / | 508 | 459 | 365 | 298 | 55 | 5.6×10⁻² | 8.4×10⁻² | 1.4×10⁻¹ | 2.9×10⁻¹ |
| Embodiment 16 | / | 1158 | 836 | 426 | 347 | 44 | 1.7×10⁻² | 2.8×10⁻² | 5.5×10⁻² | 8.6×10⁻² |
| Embodiment 17 | / | 789 | 638 | 411 | 365 | 51 | 2.2×10⁻² | 3.8×10⁻² | 7.3×10⁻² | 9.4×10⁻² |
| Embodiment 18 | / | 828 | 655 | 515 | 476 | 49 | 2.1×10⁻² | 3.5×10⁻² | 5.1×10⁻² | 8.4×10⁻² |
| Embodiment 19 | / | 988 | 746 | 470 | 392 | 52 | 1.0×10⁻² | 2.4×10⁻² | 4.6×10⁻² | 8.0×10⁻² |
| Embodiment 20 | / | 501 | 412 | 375 | 287 | 66 | 4.6×10⁻² | 7.6×10⁻² | 9.6×10⁻² | 1.8×10⁻¹ |
| Embodiment 21 | / | 524 | 449 | 408 | 345 | 59 | 2.4×10⁻² | 4.5×10⁻² | 7.8×10⁻² | 9.2×10⁻² |
| Embodiment 22 | / | 854 | 672 | 425 | 369 | 54 | 1.4×10⁻² | 3.0×10⁻² | 4.1×10⁻² | 9.7×10⁻² |
| Embodiment 23 | / | 538 | 467 | 412 | 305 | 59 | 3.5×10⁻² | 6.0×10⁻² | 8.6×10⁻² | 1.1×10⁻¹ |
| Embodiment 24 | 91 | 3788 | 2643 | 1490 | 965 | 37 | 9.7×10⁻³ | 1.8×10⁻² | 4.5×10⁻² | 6.3×10⁻² |
| Embodiment 25 | 97 | 7541 | 3680 | 2784 | 1566 | 31 | 2.8×10⁻³ | 7.3×10⁻³ | 9.6×10⁻³ | 1.6×10⁻² |
| Embodiment 26 | 65 | 6145 | 2065 | 1347 | 958 | 22 | 3.8×10⁻³ | 6.7×10⁻³ | 9.4×10⁻³ | 1.9×10⁻² |
| Embodiment 27 | 59 | 5187 | 1028 | 563 | 367 | 30 | 8.5×10⁻³ | 1.5×10⁻² | 3.8×10⁻² | 5.1×10⁻² |
| Embodiment 28 | 63 | 6238 | 2298 | 1514 | 636 | 24 | 4.1×10⁻³ | 7.3×10⁻³ | 2.0×10⁻² | 2.4×10⁻² |
| Embodiment 29 | 70 | 6597 | 1578 | 1190 | 839 | 28 | 5.0×10⁻³ | 9.8×10⁻³ | 1.5×10⁻² | 2.1×10⁻² |
| Embodiment 30 | 74 | 6597 | 1578 | 1190 | 839 | 28 | 5.0×10⁻³ | 9.8×10⁻³ | 1.5×10⁻² | 2.1×10⁻² |
| Embodiment 31 | / | 550 | 498 | 437 | 358 | 52 | 3.1×10⁻² | 5.8×10⁻² | 8.3×10⁻² | 9.9×10⁻² |
| Embodiment 32 | / | 550 | 498 | 437 | 358 | 52 | 3.1×10⁻² | 5.8×10⁻² | 8.3×10⁻² | 9.9×10⁻² |
| Comparative Embodiment 1 | / | 165 | 108 | 53 | 33 | 74 | 6.8×10⁻² | 8.7×10⁻² | 1.6×10⁻¹ | 4.0×10⁻¹ |
| Comparative Embodiment 2 | / | 256 | 207 | 103 | 84 | 69 | 5.5×10⁻² | 6.9×10⁻² | 9.5×10⁻² | 2.5×10⁻¹ |
| Comparative Embodiment 3 | / | 127 | 95 | 48 | 21 | 78 | 8.4×10⁻² | 9.6×10⁻² | 2.0×10⁻¹ | 4.6×10⁻¹ |
| Comparative Embodiment 4 | / | 234 | 159 | 87 | 54 | 67 | 7.5×10⁻² | 9.6×10⁻² | 1.9×10⁻¹ | 5.8×10⁻¹ |
| Comparative Embodiment 5 | / | 256 | 178 | 98 | 65 | 46 | 7.6×10⁻² | 9.3×10⁻² | 2.2×10⁻¹ | 5.6×10⁻¹ |
| Comparative Embodiment 6 | / | / | / | / | / | / | 2.0×10⁻⁵ | 9.7×10⁻⁵ | 2.5×10⁻⁴ | 6.8×10⁻⁴ |
| Comparative Embodiment 7 | / | / | / | / | / | / | 5.7×10⁻⁵ | 1.8×10⁻⁴ | 4.3×10⁻⁴ | 8.3×10⁻⁴ |

**Table 3**

| Serial number | Battery | | | | | | | |
|---|---|---|---|---|---|---|---|---|
| | Coulombic efficiency (%) | | | | Number of cycles counted when capacity retention rate fades to 80% (cls) | | Pouch thickness expansion rate (%) | |
| | 25 °C | 40 °C | 60 °C | 80 °C | 25 °C | 60 °C | 25 °C | 60 °C |
| Embodiment 1 | 99.7 | 99.2 | 94.0 | 84.5 | 800 | 200 | 14 | 32 |
| Embodiment 2 | 99.6 | 99.0 | 93.4 | 85.8 | 800 | 150 | 28 | 36 |
| Embodiment 3 | 99.4 | 98.5 | 90.5 | 79.2 | 650 | 100 | 31 | 42 |
| Embodiment 4 | 99.9 | 99.4 | 94.8 | 87.7 | 1000 | 200 | 15 | 28 |
| Embodiment 5 | 99.9 | 99.5 | 98.3 | 91.0 | 2000 | 600 | 9 | 14 |
| Embodiment 6 | 99.9 | 99.7 | 97.5 | 90.4 | 2000 | 650 | 14 | 17 |
| Embodiment 7 | 99.9 | 99.8 | 98.5 | 96.1 | 2000 | 1000 | 10 | 15 |
| Embodiment 8 | 99.9 | 99.8 | 98.3 | 93.5 | 2000 | 900 | 7 | 20 |
| Embodiment 9 | 99.9 | 99.1 | 96.5 | 90.9 | 1800 | 450 | 18 | 26 |
| Embodiment 10 | 98.3 | 97.0 | 89.2 | 75.7 | 450 | 50 | 30 | 35 |
| Embodiment 11 | 99.2 | 98.1 | 92.4 | 86.5 | 800 | 100 | 23 | 32 |
| Embodiment 12 | 99.9 | 98.3 | 95.3 | 88.6 | 2000 | 200 | 28 | 34 |
| Embodiment 13 | 99.0 | 97.3 | 94.6 | 89.2 | 900 | 150 | 25 | 36 |
| Embodiment 14 | 98.9 | 98.5 | 96.3 | 90.4 | 600 | 200 | 17 | 29 |
| Embodiment 15 | 99.6 | 96.5 | 93.4 | 85.7 | 800 | 100 | 25 | 37 |
| Embodiment 16 | 99.8 | 98.5 | 96.3 | 89.4 | 1200 | 400 | 19 | 28 |
| Embodiment 17 | 97.3 | 90.4 | 89.0 | 69.3 | 250 | 100 | 34 | 44 |
| Embodiment 18 | 99.7 | 99.1 | 94.6 | 90.2 | 900 | 250 | 19 | 30 |
| Embodiment 19 | 99.8 | 99.2 | 96.5 | 91.4 | 1000 | 350 | 22 | 32 |
| Embodiment 20 | 99.2 | 98.1 | 91.6 | 84.7 | 500 | 150 | 24 | 35 |
| Embodiment 21 | 99.5 | 98.6 | 92.3 | 85.9 | 550 | 150 | 25 | 31 |
| Embodiment 22 | 99.8 | 99.0 | 93.1 | 90.5 | 1300 | 350 | 21 | 30 |
| Embodiment 23 | 99.6 | 98.3 | 92.4 | 86.9 | 750 | 300 | 19 | 28 |
| Embodiment 24 | 99.6 | 98.6 | 94.9 | 89.8 | 600 | 300 | 17 | 29 |
| Embodiment 25 | 99.8 | 98.4 | 96.0 | 92.1 | 900 | 350 | 15 | 30 |
| Embodiment 26 | 99.8 | 98.8 | 97.1 | 92.9 | 1400 | 500 | 11 | 20 |
| Embodiment 27 | 99.8 | 98.2 | 95.9 | 91.3 | 1200 | 400 | 18 | 27 |
| Embodiment 28 | 99.7 | 98.3 | 94.7 | 92.5 | 1100 | 400 | 13 | 28 |
| Embodiment 29 | 99.0 | 97.4 | 96.1 | 94.2 | 400 | 150 | 15 | 24 |
| Embodiment 30 | 99.6 | 98.2 | 97.4 | 96.0 | 550 | 250 | 13 | 20 |
| Embodiment 31 | 97.1 | 96.7 | 89.4 | 71.8 | 200 | 50 | 26 | 40 |
| Embodiment 32 | 98.5 | 97.8 | 91.8 | 82.2 | 250 | 50 | 21 | 32 |
| Comparative Embodiment 1 | 99.0 | 98.1 | 88.9 | 79.4 | 600 | 100 | 27 | 35 |
| Comparative Embodiment 2 | 98.0 | 95.2 | 84.9 | 66.2 | 200 | 50 | 33 | 51 |
| Comparative Embodiment 3 | 98.0 | 96.2 | 85.2 | 73.4 | 200 | 50 | 31 | 37 |
| Comparative Embodiment 4 | 99.3 | 98.5 | 90.1 | 81.2 | 650 | 100 | 22 | 31 |
| Comparative Embodiment 5 | 99.6 | 99.0 | 94.5 | 90.2 | 1200 | 250 | 13 | 25 |
| Comparative Embodiment 6 | 99.0 | 99.1 | 98.9 | 93.4 | 200 | 150 | 7 | 9 |
| Comparative Embodiment 7 | 99.9 | 99.7 | 99.2 | 95.6 | 400 | 200 | 5 | 10 |

As can be seen from the above results, in Embodiments 1 to 32, the viscosity of the gel electrolyte composition at 25 °C is 500 mPa·s to 100000 mPa·s; the sodium salt in the gel electrolyte composition is selected from sodium chloride, sodium tetrafluoroborate, sodium hexafluorophosphate, sodium trifluoromethanesulfonate, sodium bis(fluorosulfonyl)imide, or sodium bis(trifluoromethanesulfonyl)imide; the solvent in the gel electrolyte composition is selected from monoglyme, tetrahydrofuran, 1,3-dioxolane, or ethylene carbonate; and the polymer in the gel electrolyte composition is one or two selected from polyethylene oxide, poly(vinylidene difluoride-co-hexafluoropropylene), polyethylene glycol, polyvinylpyrrolidone, or perfluoropolyether. As can be seen from Embodiments 1 to 4, 10 to 23, and 31 to 32 versus Comparative Embodiments 1 to 3 as well as Embodiments 5 to 9 and 24 to 30 versus Comparative Embodiments 4 to 5, the gel electrolyte composition possesses a more appropriate viscosity range than the liquid electrolyte, thereby improving the Coulombic efficiency of the batteries at 60 °C. As can be seen from Embodiments 1 to 32 versus Comparative Embodiments 6 to 7, the gel electrolyte composition possesses a more appropriate viscosity range than the all-solid electrolyte, thereby improving the ionic conductivity of the gel electrolyte composition at 25 °C, 40 °C, 60 °C, and 80 °C.

As can be seen from Embodiments 1 to 32 versus Comparative Embodiments 6 to 7, based on the total amount of substance of the solvent, the percentage of the amount of substance of the free solvent to the total amount of substance of the solvent in the gel electrolyte composition is 0 to 70%, so that the gel electrolyte composition possesses a more appropriate mass percent range of the free solvent than the all-solid electrolyte, thereby facilitating free movement of ions, thereby improving the ionic conductivity of the gel electrolyte composition at 25 °C, 40 °C, 60 °C, and 80 °C.

As can be seen from Embodiments 1 to 4 versus Comparative Embodiments 1 to 3 as well as Embodiments 5 to 9 versus Comparative Embodiments 4 to 5, the mass percent of the sodium salt based on the total mass of the gel electrolyte composition is controlled to fall within the range of 5% to 70%. In this way, compared with the liquid electrolyte, the gel electrolyte composition can effectively improve the Coulombic efficiency of the battery at 25 °C, 40 °C, and 60 °C, and broaden the temperature range in which the battery is applicable. As can be seen from Embodiments 1 to 9 versus Comparative Embodiments 6 to 7, the mass percent of the sodium salt based on the total mass of the gel electrolyte composition is controlled to fall within the range of 5% to 70%. In this way, compared with the all-solid electrolyte, the gel electrolyte composition can effectively improve the ionic conductivity of the gel electrolyte composition at 25 °C, 40 °C, 60 °C, and 80 °C, increase the number of cycles counted when the capacity retention rate of the battery cycled at 25 °C fades to 80%, and improve the battery performance.

As can be seen from Embodiments 1 to 4 versus Comparative Embodiments 1 to 3 as well as Embodiments 5 to 9 versus Comparative Embodiments 4 to 5, the mass percent of the solvent based on the total mass of the gel electrolyte composition is controlled to fall within the range of 20% to 75%. In this way, compared with the liquid electrolyte, the gel electrolyte composition can effectively improve the Coulombic efficiency of the battery at 25 °C, 40 °C, and 60 °C and broaden the temperature range in which the battery is applicable. As can be seen from Embodiments 1 to 9 versus Comparative Embodiments 6 to 7, the mass percent of the solvent based on the total mass of the gel electrolyte composition is controlled to fall within the range of 20% to 75%. In this way, compared with the all-solid electrolyte, the gel electrolyte composition can effectively improve the ionic conductivity, increase the number of cycles counted when the capacity retention rate of the battery cycled at 25 °C fades to 80%, and improve the battery performance.

As can be seen from Embodiments 1 to 4 versus Comparative Embodiments 1 to 3 as well as Embodiments 5 to 9 versus Comparative Embodiments 4 to 5, the mass percent of the polymer based on the total mass of the gel electrolyte composition is controlled to fall within the range of 2% to 20%. In this way, compared with the liquid electrolyte, the gel electrolyte composition can effectively improve the Coulombic efficiency of the battery at 25 °C, 40 °C, and 60 °C, and broaden the temperature range in which the battery is applicable. As can be seen from Embodiments 1 to 9 versus Comparative Embodiments 6 to 7, the mass percent of the polymer based on the total mass of the gel electrolyte composition is controlled to fall within the range of 2% to 20%. In this way, compared with the all-solid electrolyte, the gel electrolyte composition can effectively improve the ionic conductivity, increase the number of cycles counted when the capacity retention rate of the battery cycled at 25 °C fades to 80%, and improve the battery performance.

As can be seen, in Embodiments 5 to 9 and Embodiments 24 to 30, the gel electrolyte composition is a supersaturated gel electrolyte composition, and the viscosity of the supersaturated gel electrolyte composition at 25 °C is 3000 mPa·s to 100000 mPa·s, and optionally 3000 mPa·s to 11000 mPa·s; the viscosity of supersaturated gel electrolyte composition at 60 °C is 500 mPa·s to 5000 mPa·s, and optionally 500 mPa·s to 3000 mPa·s; the sodium salt in the supersaturated gel electrolyte composition is selected from sodium chloride, sodium hexafluorophosphate, sodium trifluoromethanesulfonate, or sodium bis(fluorosulfonyl)imide; the solvent in the supersaturated gel electrolyte composition is selected from monoglyme or ethylene carbonate; and the polymer in the supersaturated gel electrolyte composition is one or two selected from polyethylene oxide, polyethylene glycol, or polyvinylpyrrolidone. As can be seen from Embodiments 5 to 9 and Embodiments 24 to 30 versus Comparative Embodiments 4 to 5, compared with the liquid electrolyte, the supersaturated gel electrolyte composition falling within an appropriate viscosity range improves the Coulombic efficiency of the battery at 60 °C. As can be seen from Embodiments 5 to 9 and Embodiments 24 to 30 versus Comparative Embodiments 6 to 7, compared with the all-solid electrolyte, the supersaturated gel electrolyte composition falling within a more appropriate viscosity range improves the ionic conductivity of the supersaturated gel electrolyte composition at 25 °C, 40 °C, 60 °C, and 80 °C.

As can be seen Embodiments 5 to 9 versus Embodiments 1 to 4, Embodiment 24 versus Embodiment 10, Embodiment 25 versus Embodiment 12, Embodiments 26 versus 13, Embodiments 27 versus 20, Embodiments 28 versus 21, Embodiments 29 versus 31, and Embodiments 30 versus 32, compared with other gel electrolyte compositions, the supersaturated gel electrolyte composition possesses a higher concentration of sodium salts including dissolved sodium salts and crystallized sodium salt, thereby improving the Coulombic efficiency of the battery at 60 °C and 80 °C, increasing the number of cycles counted when the capacity retention rate of the battery cycled at 60 °C fades to 80%, reducing the thickness expansion rate of the battery cycled at 60 °C, and improving the high-temperature performance of the battery.

As can be seen from Embodiments 5 to 9 versus Embodiments 1 to 4, Embodiment 24 versus Embodiment 10, Embodiment 25 versus Embodiment 12, Embodiments 26 versus 13, Embodiments 27 versus 20, Embodiments 28 versus 21, Embodiments 29 versus 31, and Embodiments 30 versus 32, in contrast to other gel electrolyte compositions, the median particle diameter of the crystallized sodium salt in the supersaturated gel electrolyte composition is less than or equal to 100 µm, thereby improving the Coulombic efficiency of the battery at 60 °C and 80 °C, increasing the number of cycles counted when the capacity retention rate of the battery cycled at 60 °C fades to 80%, reducing the thickness expansion rate of the battery cycled at 60 °C, and improving the high-temperature performance of the battery. As can be seen from Embodiments 5 to 9 and Embodiments 24 to 30 versus Comparative Embodiments 4 to 5, in contrast to the liquid electrolyte, in the supersaturated gel electrolyte composition, the mass percent of the sodium salt is controlled to fall within the range of 30% to 70%, the mass percent of the solvent is controlled to fall within the range of 20% to 50%, and the mass percent of the polymer is controlled to fall within the range of 2% to 20% based on the total mass of the supersaturated gel electrolyte composition, thereby improving the Coulombic efficiency of the battery at 60 °C. As can be seen from Embodiments 5 to 9 and Embodiments 24 to 30 versus Comparative Embodiments 6 to 7, in contrast to the all-solid electrolyte, in the supersaturated gel electrolyte composition, the mass percent of the sodium salt is controlled to fall within the range of 30% to 70%, the mass percent of the solvent is controlled to fall within the range of 20% to 50%, and the mass percent of the polymer is controlled to fall within the range of 5% to 20% based on the total mass of the supersaturated gel electrolyte composition, thereby improving the ionic conductivity of the supersaturated gel electrolyte composition at 25 °C, 40 °C, 60 °C, and 80 °C.

As can be seen from Embodiments 1 to 4 and Embodiments 10 to 14 versus Comparative Embodiments 1 to 3 as well as Embodiments 5 to 9 and Embodiments 24 to 26 versus Comparative Embodiments 4 to 5, the sodium salt in the gel electrolyte composition is selected from sodium chloride, sodium tetrafluoroborate, sodium hexafluorophosphate, sodium trifluoromethanesulfonate, sodium bis(fluorosulfonyl)imide, or sodium bis(trifluoromethanesulfonyl)imide, thereby improving the Coulombic efficiency of the battery at 60 °C and 80 °C, and improving the battery performance. As can be seen from Embodiment 1, Embodiments 12 to 14, and Embodiments 10 to 11, in contrast to the embodiment in which the sodium salt is selected from sodium chloride or sodium tetrafluoroborate, the embodiments in which the sodium salt is selected from sodium hexafluorophosphate, sodium trifluoromethanesulfonate, sodium bis(fluorosulfonyl)imide, or sodium bis(trifluoromethanesulfonyl)imide can further improve the Coulombic efficiency of the battery at 60°C, increase the number of cycles counted when the capacity retention rate of the battery cycled at 25 °C and 60 °C fades to 80%, and improving the battery performance significantly.

As can be seen from Embodiments 1 to 4 and Embodiments 15 to 17 versus Comparative Embodiments 1 to 3 as well as Embodiments 5 to 9 versus Comparative Embodiments 4 to 5, the solvent in the gel electrolyte composition is selected from monoglyme, tetrahydrofuran, 1,3-dioxolane, or ethylene carbonate, thereby improving the Coulombic efficiency of the battery at 60 °C. As can be seen from Embodiment 1, Embodiments 15 to 16, and Embodiment 17, in contrast to the embodiment in which the solvent is selected from ethylene carbonate, the embodiments in which the solvent is selected from monoglyme, tetrahydrofuran, or 1,3-dioxolane can further improve the Coulombic efficiency of the battery at 25 °C, 40 °C, 60 °C, and 80 °C, increase the number of cycles counted when the capacity retention rate of the battery cycled at 25 °C and 60 °C fades to 80%, reduce the thickness expansion rate of the battery cycled at 25 °C and 60 °C, and improve the performance and safety of the battery significantly.

As can be seen from Embodiments 1 to 4 and Embodiments 18 to 23 versus Comparative Embodiments 1 to 3 as well as Embodiments 5 to 9 and Embodiments 27 to 28 versus Comparative Embodiments 4 to 5, the polymer in the gel electrolyte composition, which is one or two selected from polyethylene oxide, poly(vinylidene difluoride-co-hexafluoropropylene), polyethylene glycol, polyvinylpyrrolidone, or perfluoropolyether, can improve the Coulombic efficiency of the battery at 25 °C and 60 °C, and increase the number of cycles counted when the capacity retention rate of the battery cycled at 60 °C fades to 80%. As can be seen from Embodiments 1, 18 to 20, and 22 to 23 versus Embodiment 21, in contrast to the embodiment in which the polymer is selected from polyvinylpyrrolidone, the embodiments in which the polymer is one or two selected from polyethylene oxide, poly(vinylidene difluoride-co-hexafluoropropylene), polyethylene glycol, or perfluoropolyether can further reduce the thickness expansion rate of the battery cycled at 25 °C, and improve the safety of the battery significantly.

As can be seen from Embodiments 1, 12 to 16, 18 to 20, and 22 to 23 versus Embodiments 10 to 11, 17, and 21, the battery can achieve a high level of both electrical performance and safety if, in the gel electrolyte composition, the sodium salt is selected from sodium hexafluoroborate, sodium trifluoromethanesulfonate, sodium bis(fluorosulfonyl)imide, or sodium bis(trifluoromethanesulfonyl)imide, the solvent is selected from monoglyme, tetrahydrofuran, or 1,3-dioxolane, and the polymer is one or two selected from polyethylene oxide, polyethylene glycol, perfluoropolyether, or poly(vinylidene difluoride-co-hexafluoropropylene).

As can be seen from Embodiment 1 versus Embodiments 31 to 32, in contrast to Na(Cu_{1/9}Ni_{2/9}Fe_{1/3}Mn_{1/3})O₂ or ZrO₂-/TiO₂-coated Na_{2/3}Ni_{1/6}Mn_{2/3}Cu_{1/9}Mg_{1/18}O₂ used as a positive active material, the Na₄Fe₃(PO₄)₂P₂O₇ used as a positive active material can more favorably improve the Coulombic efficiency of the battery at 25 °C, 40 °C, 60 °C, and 80 °C, increase the number of cycles counted when the capacity retention rate of the battery cycled at 25 °C and 60 °C fades to 80%, reduce the thickness expansion rate of the battery cycled at 25 °C, and improve the performance and safety of the battery significantly.

As can be seen from Embodiment 30 versus Embodiment 29 as well as Embodiment 32 versus Embodiment 31, in contrast to Na(Cu_{1/9}Ni_{2/9}Fe_{1/3}Mn_{1/3})O₂ used as a positive active material, the ZrO₂- or TiO₂-coated Na_{2/3}Ni_{1/6}Mn_{2/3}Cu_{1/9}Mg_{1/18}O₂ used as a positive active material can more favorably improve the Coulombic efficiency of the battery at 25 °C, 40 °C, 60 °C, and 80 °C, increase the number of cycles counted when the capacity retention rate of the battery cycled at 25 °C fades to 80%, reduce the thickness expansion rate of the battery cycled at 25 °C and 60 °C, and improve the performance and safety of the battery significantly.

As can be seen from Embodiment 29 versus Embodiment 31 as well as Embodiment 30 versus Embodiment 32, compared with the unsaturated gel electrolyte composition, the supersaturated gel electrolyte composition can more favorably improve the Coulombic efficiency of the battery at 25 °C, 40 °C, 60 °C, and 80 °C, increase the number of cycles counted when the capacity retention rate of the battery cycled at 25 °C and 60 °C fades to 80%, reduce the thickness expansion rate of the battery cycled at 25 °C and 60 °C, and improve the performance and safety of the battery significantly.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A gel electrolyte composition, **characterized in that** a viscosity of the gel electrolyte composition at 25 °C is 500 mPa·s to 100000 mPa·s.

2. The gel electrolyte composition according to claim 1, **characterized in that** the gel electrolyte composition comprises a solvent, wherein, based on a total amount of substance of the solvent, a percentage of an amount of substance of a free solvent to the total amount of substance of the solvent in the gel electrolyte composition, denoted as *n_{FS}*, satisfies: 0% < *n_{FS}* ≤ 70%.

3. The gel electrolyte composition according to claim 1 or 2, **characterized in that**, based on a total mass of the gel electrolyte composition, a mass percent of the solvent is 20% to 75%.

4. The gel electrolyte composition according to any one of claims 1 to 3, **characterized in that**, the gel electrolyte composition further comprises an electrolyte salt, and, based on a total mass of the gel electrolyte composition, a mass percent of the electrolyte salt is 5% to 70%.

5. The gel electrolyte composition according to any one of claims 1 to 4, **characterized in that** the gel electrolyte composition further comprises a polymer, and, based on a total mass of the gel electrolyte composition, a mass percent of the polymer is 2% to 20%.

6. The gel electrolyte composition according to any one of claims 1 to 5, **characterized in that** the gel electrolyte composition is a supersaturated gel electrolyte composition at 25 °C.

7. The gel electrolyte composition according to claim 6, **characterized in that** a viscosity of the supersaturated gel electrolyte composition at 25 °C is 3000 mPa·s to 100000 mPa·s, and the viscosity of the supersaturated gel electrolyte composition at 60 °C is 500 mPa·s to 5000 mPa·s.

8. The gel electrolyte composition according to claim 6 or 7, **characterized in that** a viscosity of the supersaturated gel electrolyte composition at 25 °C is 3000 mPa·s to 11000 mPa·s, and the viscosity of the supersaturated gel electrolyte composition at 60 °C is 500 mPa·s to 3000 mPa·s.

9. The gel electrolyte composition according to any one of claims 6 to 8, **characterized in that** the supersaturated gel electrolyte composition comprises a dissolved electrolyte salt and a crystallized electrolyte salt.

10. The gel electrolyte composition according to claim 9, **characterized in that** a median particle diameter of the crystallized electrolyte salt is less than or equal to 100 µm.

11. The gel electrolyte composition according to any one of claims 6 to 10, **characterized in that**, based on a total mass of the supersaturated gel electrolyte composition, a mass percent of the electrolyte salt is 30% to 70%, a mass percent of the solvent is 20% to 60%, and a mass percent of the polymer is 2% to 20%.

12. The gel electrolyte composition according to any one of claims 4 to 11, **characterized in that** the electrolyte salt comprises a sodium salt; and the sodium salt comprises one or more of sodium chloride, sodium bromide, sodium nitrate, sodium perchlorate, sodium hexafluorophosphate, sodium tetrafluoroborate, sodium tetrafluoroyttrate, sodium hexafluoroarsenate, sodium tetraphenylborate, sodium acetate, sodium trifluoroacetate, sodium trifluoromethanesulfonate, sodium bis(fluorosulfonyl)imide, sodium bis(trifluoromethanesulfonyl)imide, or sodium (n-perfluorobutylsulfonyl)imide, and optionally comprises one or more of sodium hexafluorophosphate, sodium trifluoromethanesulfonate, sodium bis(fluorosulfonyl)imide, or sodium bis(trifluoromethanesulfonyl)imide.

13. The gel electrolyte composition according to any one of claims 2 to 12, **characterized in that** the solvent comprises one or more of an ether organic solvent, an ester organic solvent, or a sulfur-containing organic solvent; and the solvent comprises one or more of monoglyme, diglyme, triglyme, tetraglyme, tetrahydrofuran, 1,3-dioxolane, ethylene carbonate, propylene carbonate, butylene carbonate, vinylene carbonate, fluoroethylene carbonate, ethyl methyl carbonate, dimethyl carbonate, diethyl carbonate, dipropyl carbonate, methyl propyl carbonate, ethyl propyl carbonate, γ-butyrolactone, 1,3-propane sultone, methyl propionate, methyl butyrate, ethyl acetate, ethyl propionate, propyl propionate, ethyl butyrate, or dimethyl sulfoxide, and optionally comprises one or more of monoglyme, tetrahydrofuran, or 1,3-dioxolane.

14. The gel electrolyte composition according to any one of claims 5 to 13, **characterized in that** the polymer comprises one or more of polyethylene oxide, polyethylene glycol, polyvinylpyrrolidone, polymethyl methacrylate, polyvinylidene difluoride, polyvinyl alcohol, polyacrylonitrile, polyvinyl chloride, polyacrylamide, polytrimethylene carbonate, perfluoropolyether, or poly(vinylidene difluoride-co-hexafluoropropylene), and optionally comprises one or more of polyethylene oxide, polyethylene glycol, perfluoropolyether, or poly(vinylidene difluoride-co-hexafluoropropylene).

15. The gel electrolyte composition according to any one of claims 5 to 14, **characterized in that** the electrolyte salt comprises one or more of sodium trifluoromethanesulfonate, sodium bis(fluorosulfonyl)imide, or sodium bis(trifluoromethanesulfonyl)imide; the solvent comprises one or more of monoglyme, tetrahydrofuran, or 1,3-dioxolane; and the polymer comprises one or more of polyethylene oxide, polyethylene glycol, perfluoropolyether, or poly(vinylidene difluoride-co-hexafluoropropylene).

16. A secondary battery, wherein the secondary battery comprises a positive electrode plate and the gel electrolyte composition according to any one of claims 1 to 15.

17. The secondary battery according to claim 16, **characterized in that** the secondary battery comprises at least one of a lithium battery or a sodium battery.

18. The secondary battery according to claim 16 or 17, **characterized in that** the secondary battery is an anode-free sodium battery.

19. The secondary battery according to any one of claims 16 to 18, **characterized in that** the positive electrode plate comprises a positive active material; and the positive active material comprises at least one of a layered transition metal oxide, a polyanionic compound, or a Prussian blue compound, comprising one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, or NaMnFe(CN)₆.

20. The secondary battery according to any one of claims 16 to 19, **characterized in that** a surface of a positive active material is coated with a coating layer; the coating layer comprises one or more of a carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, or aluminum fluoride; and the carbon material comprises one or more of amorphous carbon, graphite, or graphene.

21. A battery module, **characterized in that** the battery module comprises the secondary battery according to any one of claims 16 to 20.

22. A battery pack, **characterized in that** the battery pack comprises the secondary battery according to any one of claims 16 to 20 or the battery module according to claim 21.

23. An electrical device, **characterized in that** the electrical device comprises at least one of the secondary battery according to any one of claims 16 to 20, the battery module according to claim 21, or the battery pack according to claim 22.
